(19) Europäisches Patentamt
European Patent Office
Office européen des brevets

(11) **EP 4 294 099 B1**

(12) **EUROPEAN PATENT SPECIFICATION**

(45) Date of publication and mention
of the grant of the patent:
**29.07.2026 Bulletin 2026/31**

(21) Application number: **22762497.0**

(22) Date of filing: **28.02.2022**

(51) International Patent Classification (IPC):
*H04L 5/00* (2006.01)    *H04W 72/04* (2023.01)
*H04L 27/26* (2006.01)    *H04W 28/20* (2009.01)
*H04W 84/12* (2009.01)

(52) Cooperative Patent Classification (CPC):
**H04L 5/0094; H04L 5/0007; H04L 5/0044;
H04L 27/2602;** H04W 28/20; H04W 84/12

(86) International application number:
**PCT/CN2022/078501**

(87) International publication number:
**WO 2022/184032 (09.09.2022 Gazette 2022/36)**

(54) **RESOURCE ALLOCATION METHOD AND COMMUNICATION DEVICE**

RESSOURCENZUWEISUNGSVERFAHREN UND KOMMUNIKATIONSVORRICHTUNG

PROCÉDÉ D'ATTRIBUTION DE RESSOURCES ET DISPOSITIF DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2021 CN 202110247423**

(43) Date of publication of application:
**20.12.2023 Bulletin 2023/51**

(73) Proprietor: **Huawei Technologies Co., Ltd.
Shenzhen, Guangdong 518129 (CN)**

(72) Inventors:
• **HU, Mengshi
Shenzhen, Guangdong 518129 (CN)**
• **YU, Jian
Shenzhen, Guangdong 518129 (CN)**
• **GAN, Ming
Shenzhen, Guangdong 518129 (CN)**
• **LI, Yunbo
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
WO-A1-2020/032700     CN-A- 101 779 432
CN-A- 111 247 849     US-A1- 2020 229 220
US-A1- 2020 244 420

## Description

### TECHNICAL FIELD

This application relates to the field of mobile communication technologies, and in particular, to a resource allocation method and a communication apparatus.

### BACKGROUND

Transmit power of a device is limited by both a maximum power and a maximum power spectral density. That is, the transmit power of the device cannot exceed the maximum power or the maximum power spectral density. To enable the transmit power of the device to be higher, a corresponding transmit bandwidth may be expanded, that is, subcarriers allocated to the device become more discrete in frequency domain, that is, a quantity of subcarriers in each MHz is reduced.

However, resource units (resource units, RUs) of different sizes may correspond to a plurality of discrete subcarrier combinations, and therefore more RUs or RU combinations need to be defined. In addition, to indicate more types of discrete RUs or discrete RU combinations, an existing method for allocating an RU formed by contiguous subcarriers needs to be changed, and implementation is complex for a transmit end.

US 2020/244420 A1 describes a wireless communication method related to resource allocation of PDSCH/PUSCH in NR. A base station allocates physical resource blocks (PRBs) for data transmission based on one of a set of resource allocations and transmits data on the PRBs to a user equipment (UE), wherein the set of resource allocations comprises a first resource allocation of interleaving virtual resource blocks (VRBs) consecutively numbered and mapping the interleaved VRBs to the PRBs consecutive in frequency domain. In an example, consecutive 6 VRBs numbered in 0, 1, 2, 3, 4, 5 are used for a code block 1, while consecutive 6 VRBs numbered in 6, 7, 8, 9, 10, 11 are used for a code block 2. The base station applies a block interleaver so that VRBs numbered in 0, 4, 8, 1, 5, 9, 2, 6, 10, 3, 7, 11 are respectively mapped to PRBs numbered in 0, 1, 2, 3, 4, 5, 6, 7, 8, 9, 10, 11.

US 2020/229220 A1 describes that a user equipment (UE) receives downlink data using resource blocks in a wireless mobile communication system. The UE receives downlink control information including resource allocation information and downlink data mapped to PRBs based on the downlink control information. The resource allocation information indicates VRB allocations for the UE. Indexes of the PRBs to which the downlink data are mapped are determined based on a mapping relationship between VRBs and the PRBs. The mapping relationship is defined based on indexes of the VRBs which are mapped to the indexes of the PRBs for a first slot of a subframe and a second slot of the subframe. The indexes of the PRBs for the second slot are shifted with respect to the indexes of the PRBs for the first slot based on a predetermined gap. The mapping relationship includes a transformation of VRB indexes based on a matrix.

### SUMMARY

This application provides a resource allocation method and a communication apparatus, so that a device can support higher transmit power.

Aspects of the present invention are provided in the independent claims and further detailed in the dependent claims. According to the present invention,

the contiguous VRU is mapped to the discrete PRU, it is equivalent to reducing a quantity of subcarriers in each MHz, so that the first device can support higher transmit power.

The scope of the present invention is defined by the scope of the appended claims.

### BRIEF DESCRIPTION OF DRAWINGS

FIG. 1 shows a network architecture of a wireless local area network to which an embodiment of this application is applicable;
FIG. 2 is a schematic diagram of a tone plan and RU distribution of 20 MHz;
FIG. 3 is a schematic diagram of a tone plan and RU distribution of 40 MHz;
FIG. 4 is a schematic diagram of a tone plan and RU distribution of 80 MHz;
FIG. 5 is a schematic diagram of a plurality of contiguous RUs corresponding to a discrete 26-tone RU;
FIG. 6 is a schematic diagram of a plurality of contiguous RUs corresponding to a discrete 996-tone RU;
FIG. 7 is a schematic diagram of distribution of a 26-tone RU with discrete subcarriers;
FIG. 8 is a schematic diagram of distribution of a 52-tone RU with discrete subcarriers;

FIG. 9 is a schematic flowchart of a resource allocation method according to an embodiment of this application;

FIG. 10 is a schematic diagram of a mapping range between a VRU and a PRU according to an embodiment of this application;

FIG. 11 is a schematic diagram of a mapping manner from a VRU to a PRU according to an embodiment of this application;

FIG. 12 is a schematic diagram in which all 242 subcarriers in 20 MHz participate in mapping according to an embodiment of this application;

FIG. 13 is a schematic diagram in which a second-type subcarrier does not participate in mapping according to an embodiment of this application;

FIG. 14 is another schematic diagram in which a second-type subcarrier does not participate in mapping according to an embodiment of this application;

FIG. 15 is still another schematic diagram in which a second-type subcarrier does not participate in mapping according to an embodiment of this application;

FIG. 16 is a schematic diagram of mapping a VRU of 20 MHz in 80 MHz to a PRU according to an embodiment of this application;

FIG. 17 is another schematic diagram of mapping a VRU of 20 MHz in 80 MHz to a PRU according to an embodiment of this application;

FIG. 18 is a schematic diagram of a location of a pilot subcarrier in 80 MHz;

FIG. 19 is a schematic diagram of a row change of an interleaving matrix according to an embodiment of this application;

FIG. 20 is a schematic diagram of a correspondence between an original row index sequence and a target row index sequence according to an embodiment of this application;

FIG. 21 is another schematic diagram of a correspondence between an original row index sequence and a target row index sequence according to an embodiment of this application;

FIG. 22 is still another schematic diagram of a correspondence between an original row index sequence and a target row index sequence according to an embodiment of this application;

FIG. 23 is a schematic diagram of a structure of a communication apparatus according to an embodiment of this application; and

FIG. 24 is a schematic diagram of another structure of a communication apparatus according to an embodiment of this application.

## DESCRIPTION OF EMBODIMENTS

To make objectives, technical solution, and advantages of embodiments of this application clearer, the following further describes embodiments of this application in detail with reference to the accompanying drawings.

Embodiments of this application may be applied to a wireless local area network (wireless local area network, WLAN) scenario, and may be applied to an IEEE 802.11 system standard, for example, 802.11a/b/g, 802.11n, 802.11ac, 802.11ax, or a next-generation standard, for example, 802.11be, or a further next-generation standard. Alternatively, embodiments of this application may be applied to a wireless local area network system, for example, an internet of things (internet of things, IoT) network or a vehicle-to-everything (Vehicle to X, V2X) network. It is clear that embodiments of this application are also applicable to another possible communication system, for example, an LTE system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a future 5G communication system.

The following uses an example in which embodiments of this application are applicable to a WLAN scenario. It should be understood that the WLAN develops from the 802.11a/g standard, and goes through 802.11n, 802.11ac, 802.11ax, and 802.11be that is currently being discussed. 802.11n can also be referred to as high throughput (high throughput, HT), 802.11ac can also be referred to as very high throughput (very high throughput, VHT), 802.11ax can also be referred to as high efficiency (high efficient, HE) or Wi-Fi 6, and 802.11be can also be referred to as extremely high throughput (extremely high throughput, EHT) or Wi-Fi 7. Standards before HT, such as 802.11a/b/g, are collectively referred to as non-high throughput (Non-HT).

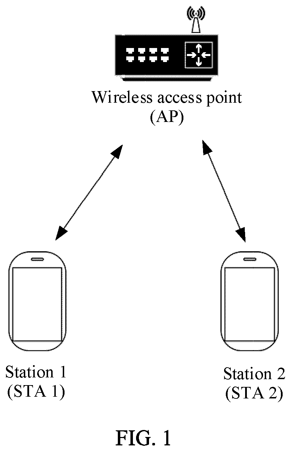

FIG. 1 is a schematic diagram of a network architecture of a WLAN to which an embodiment of this application is applicable. In FIG. 1, that the WLAN includes one wireless access point (access point, AP) and two stations (station, STA) is used as an example. A STA associated with an AP can receive a radio frame sent by the AP, and can also send a radio frame to the AP. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 1 are merely an example. There may be more or less APs and STAs.

The STA in this embodiment of this application may be a user terminal, a user apparatus, an access apparatus, a subscriber station, a subscriber unit, a mobile station, a user agent, a user device, or another device that has a wireless communication function. The user terminal may be a device having a wireless communication function, for example, a handheld device, a vehicle-mounted device, a wearable device, a computing device, and another processing device connected to a wireless modem. The user terminal may alternatively be user equipment (user equipment, UE), a mobile station (mobile station, MS), a terminal (terminal), terminal equipment (terminal equipment), a portable communication device, a handheld device, a portable computing device, an entertainment device, a game device or system, a global positioning system device, or any other suitable device in various forms configured to perform network communication via wireless media. For example, the STA may be a router, a switch, a bridge, or the like. Herein, for ease of description, the devices mentioned above are collectively referred to as a station or a STA.

The AP and the STA in embodiments of this application may be an AP and a STA that are applicable to an IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device such as a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports media access control (media access control, MAC) and a physical layer (physical, PHY) of the 802.11 system standard, for example, a mobile phone or a notebook computer.

The AP communicates with the STA. The AP may allocate a resource to the STA. The STA receives and sends data on the allocated resource. For example, an orthogonal frequency division multiple access (orthogonal frequency division multiple access, OFDMA) technology or a multi-user multiple-input multiple-output (multi-users multiple-input multiple-output, MU-MIMO) technology may be used for wireless communication between the AP and the STA. It should be understood that a resource actually occupied by the STA for data transmission is a PRU, but a resource allocated by the AP to the STA may be a PRU or a virtual resource unit VRU. The VRU is a virtual RU, and is relative to the PRU. If the resource allocated by the AP to the STA may be the VRU, after receiving the VRU, the STA may convert the VRU into the PRU, and then send data on the PRU.

In OFDMA and MU-MIMO technologies, a spectrum bandwidth is divided into several resource units (resource unit, RU) according to a WLAN protocol. For example, bandwidth configurations supported by the 802.11ax protocol include 20 MHz, 40 MHz, 80 MHz, 160 MHz, and 80+80 MHz. For example, in addition to the bandwidth configurations supported by the 802.11ax protocol, a bandwidth configuration supported by the 802.11be protocol may further include 320 MHz. A difference between 160 MHz and 80+80 MHz lies in that the former is a contiguous frequency band, and two 80 MHz segments of the latter may be separated. 160 MHz formed by 80+80 MHz is noncontiguous. The IEEE 802.11ax protocol specifies that a spectral bandwidth of 20 MHz, 40 MHz, 80 MHz, or 160 MHz may be divided into a plurality of types of RUs including a 26-tone RU, a 52-tone RU, a 106-tone RU, a 242-tone RU (a largest RU in a 20 MHz bandwidth), a 484-tone RU (a largest RU in a 40 MHz bandwidth), a 996-tone RU (a largest RU in an 80 MHz bandwidth), and a 2*996-tone RU (a largest RU in a 160 MHz bandwidth). Each RU includes contiguous subcarriers. For example, the 26-tone RU is an RU including 26 contiguous subcarriers. In the following, the 26-tone RU is denoted as a 26-tone RU, the 52-tone RU is denoted as a 52-tone RU, and so on. In addition to the 26-tone RU, the 52-tone RU, and the like that are used to transmit data, the entire bandwidth further include another subcarrier, for example, one or more of a guard (Guard) subcarrier, a null subcarrier, a direct current (direct current, DC) subcarrier, and a pilot subcarrier. For ease of description, in this specification, the subcarrier used to transmit data is referred to as a first-type subcarrier, and the another subcarrier is uniformly referred to as a second-type subcarrier.

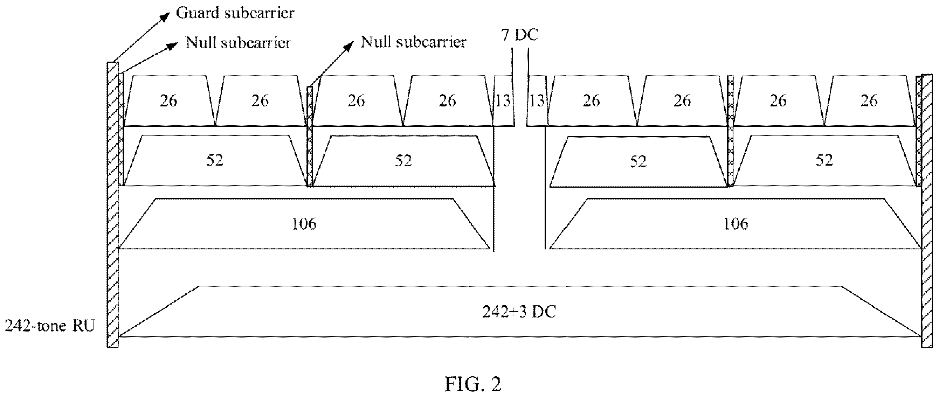

FIG. 2 is a schematic diagram of a tone plan and RU distribution of 20 MHz. As shown in FIG. 2, when a bandwidth is 20 MHz, the entire bandwidth may include an entire 242-tone RU, or may include any combination of a 26-tone RU, a 52-tone RU, and a 106-tone RU. For example, the 20 MHz may include eight 26-tone RUs, four 52-tone RUs, or two 106-tone RUs. It can be learned from FIG. 2 that a bandwidth of one 242-tone RU is approximately 20 MHz, a bandwidth of one 106-tone RU is approximately 8 MHz, a bandwidth of one 52-tone RU is approximately 4 MHz, and a bandwidth of one 26-tone RU is approximately 2 MHz. It should be noted that the entire bandwidth further includes one or more of some guard subcarriers, null subcarriers, direct current subcarriers, and pilot subcarriers. For example, the 20 MHz shown in FIG. 2 further includes a guard subcarrier, a null subcarrier, and a direct current subcarrier.

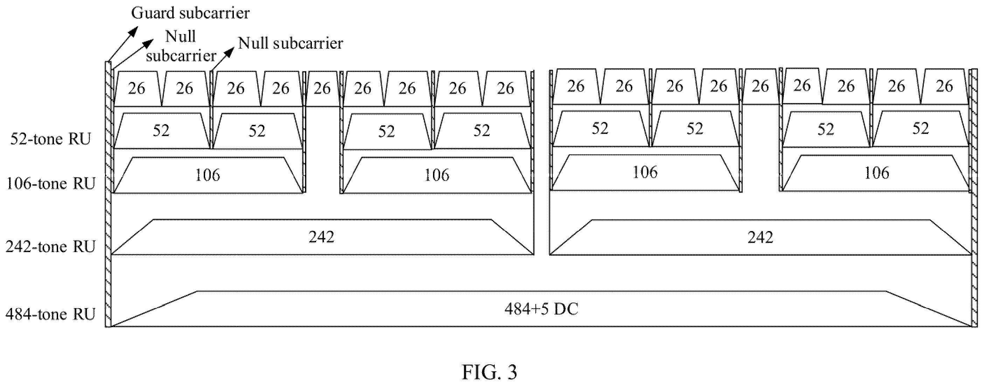

When a bandwidth is 40 MHz, the entire bandwidth is approximately equivalent to replication of two tone plans of 20 MHz, and may include an entire 484-tone RU or any combination of a 26-tone RU, a 52-tone RU, a 106-tone RU, and a 242-tone RU, as shown in FIG. 3. In FIG. 3, "5 DC" represents five direct current subcarriers. Similar to the 20 MHz, the 40 MHz also includes one or more of some guard subcarriers, null subcarriers, and direct current subcarriers. It should be understood that a bandwidth of the 484-tone RU is approximately 40 MHz.

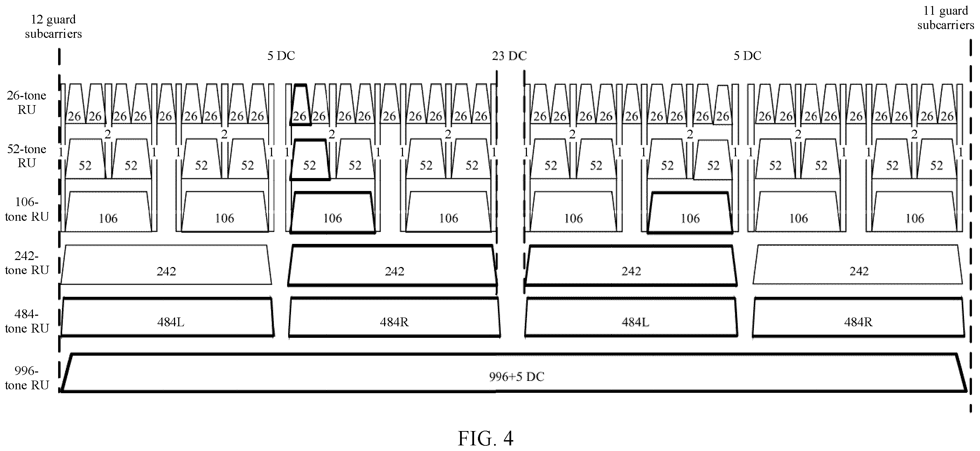

When a bandwidth is 80 MHz, the entire bandwidth includes a resource unit in a unit of four 242-tone RUs. The entire bandwidth may include an entire 996-tone RU or any combination of a 26-tone RU, a 52-tone RU, a 106-tone RU, a 242-tone RU, and a 484-tone RU, as shown in FIG. 4. 484L and 484R in FIG. 4 represent a left half part and a right half part of the 484-tone RU, respectively including 242 subcarriers, which is another schematic diagram of "484+5 DC" in FIG. 3. In FIG. 4, "5 DC" represents five direct current subcarriers, and "23 DC" represents 23 direct current subcarriers. Similar to the 20 MHz, the 80 MHz also includes one or more of some guard subcarriers, null subcarriers, and direct current subcarriers. It should be understood that a bandwidth of the 996-tone RU is approximately 80 MHz.

It should be noted that when a bandwidth is 160 MHz, the entire bandwidth may be considered as replication of two tone plans of 80 MHz. The entire bandwidth may include an entire 2*996-tone RU, or may include any combination of a 26-tone RU, a 52-tone RU, a 106-tone RU, a 242-tone RU, a 484-tone RU, and a 996-tone RU. Similarly, when a bandwidth is 320 MHz, the entire bandwidth may be considered as replication of four tone plans of 80 MHz, and the entire bandwidth may include a resource unit in a unit of four 996-tone RUs. For simplicity, tone plans and RU distribution of 160 MHz and 320 MHz are not separately shown.

In the foregoing tone plans, the 242-tone RU is used as a unit. An RU on the left of each of FIG. 4 to FIG. 6 corresponds to a lowest frequency, and an RU on the right of each of FIG. 4 to FIG. 6 corresponds to a highest frequency. From left to right, 242-tone RUs may be numbered: 1st, 2nd, ..., and 16th. It should be noted that a maximum of 16 242-tone RUs are in a one-to-one correspondence with 16 20 MHz channels in ascending order of frequencies.

A plurality of contiguous or noncontiguous RUs may be allocated to one or more users, to improve RU allocation flexibility and/or frequency utilization. In this specification, a plurality of contiguous or noncontiguous RUs are referred to as a multi-RU. It should be understood that the multi-RU are RUs including a plurality of RUs. In some embodiments, the multi-RU may be denoted as a multi-RU, or may be denoted as an MRU. It should be noted that, in this specification, the multi-RU is uniformly denoted as an MRU.

For example, the 802.11be protocol further introduces a plurality of MRUs, for example, a 52+26-tone RU including one 52-tone RU and one 26-tone RU, a 106+26-tone RU including one 106-tone RU and one 26-tone RU, a 484+242-tone RU including one 484-tone RU and one 242-tone RU, a 996+484-tone RU including one 996-tone RU and one 484-tone RU, a 242+484+996-tone RU including one 242-tone RU, one 484-tone RU, and one 996-tone RU, a 2*996+484-tone RU including two 996-tone RUs and one 484-tone RU, a 3*996-tone RU including three 996-tone RUs, a 3*996+484-tone RU including three 996-tone RUs and one 484-tone RU, and the like.

Before the method provided in this application is described, the technical concepts in this application are described first.

1. Contiguous RU (continuous RU, CRU)

In this specification, the contiguous RU is an RU including a plurality of contiguous subcarriers, or the contiguous RU is an RU including two contiguous subcarrier groups. A plurality of subcarriers included in each contiguous subcarrier group are contiguous, and only one or more of a guard subcarrier, a null subcarrier, or a direct current subcarrier is spaced between the two subcarrier groups. An RU supported in 802.11ax may be understood as the contiguous RU. The contiguous RU may also be referred to as a regular RU. Certainly, the contiguous RU may alternatively have another name. A specific name of the contiguous RU is not limited in this embodiment of this application.

In this embodiment of this application, a contiguous RU including K subcarriers is referred to as a contiguous K-tone RU. For example, a contiguous 26-tone RU is a contiguous RU including 26 subcarriers. In other words, a concept of the contiguous K-tone RU is the same as a concept of a K-tone RU in the existing 802.11ax standard.

It should be understood that a plurality of subcarriers of the contiguous RU may be contiguous, or the contiguous RU may include two contiguous subcarrier groups, and the two contiguous subcarrier groups are noncontiguous. For example, a 26-tone RU including a group of 13 contiguous subcarriers and another group of 13 contiguous subcarriers is the contiguous RU. Similarly, a 996-tone RU including a group of 484 contiguous subcarriers and another group of 484 contiguous subcarriers is the contiguous RU. Such RU may also be referred to as a special contiguous RU or a generalized contiguous RU. The contiguous RU in this application also includes the special contiguous RU or the generalized contiguous RU.

2. Discrete RU (distribute RU, DRU)

Compared with the contiguous RU, an RU that includes a plurality of subcarrier groups that are discrete in frequency domain may be referred to as the discrete RU. In other words, the discrete RU includes a plurality of subcarrier groups, and any two subcarrier groups are discrete in frequency domain. One subcarrier group includes one subcarrier, or one subcarrier group includes at least two contiguous subcarriers. That is, one subcarrier group includes one subcarrier or includes a plurality of contiguous subcarriers. The discrete RU may also be referred to as a distributed RU (distributed RU, DRU). Certainly, in another embodiment, the discrete RU may also have another name. The name of the discrete RU is not limited in this application. A quantity of subcarrier groups included in one discrete RU in this application is greater than or equal to 2.

In this embodiment of this application, a discrete RU including K subcarriers may be referred to as a discrete K-tone RU. For example, a discrete 26-tone RU is a discrete RU including 26 subcarriers. For a value of K, refer to a value of K used for the contiguous RU. Certainly, the value of K may be different from the value of K used for the contiguous RU. For example, when a bandwidth is 20 MHz, the 20 MHz may include one or a combination of a discrete 26-tone RU, a discrete 52-tone RU, a discrete 106-tone RU, and a discrete 242-tone RU.

In this application, one discrete RU and another discrete RU may form a discrete MRU, and the discrete MRU can be allocated to one or more stations. For example, the discrete 242-tone RU and the discrete 484-tone RU may form a discrete 484+242-tone RU.

It should be noted that the special contiguous RU or the generalized contiguous RU mentioned above do not belong to the discrete RU in this embodiment of this application. For example, in the foregoing example, the 26-tone RU including the group of 13 contiguous subcarriers and the another group of 13 contiguous subcarriers is not the discrete RU defined in this application, but the special contiguous RU.

In some examples, quantities of subcarriers included in any two of the plurality of subcarrier groups included in the discrete RU may be the same or may be different. For example, a quantity of subcarriers in each subcarrier group may be 1. For another example, quantities of subcarriers in some subcarrier groups are 1, and quantities of subcarriers in the other subcarrier groups are 2. In other words, one discrete RU may include four subcarrier groups, and quantities of subcarriers in the four subcarrier groups may be 1, 1, 2, and 2 sequentially.

In some examples, when a quantity of subcarrier groups included in the discrete RU is greater than or equal to 3, in a plurality of discrete subcarrier groups included in the discrete RU, quantities of subcarriers between every two adjacent subcarrier groups may be the same or may be different. The every two adjacent subcarrier groups are two adjacent subcarrier groups of one discrete RU.

For example, for a discrete RU including three discrete subcarrier groups (denoted as a subcarrier group #1, a subcarrier group #2, and a subcarrier group #3), the subcarrier group #1 and the subcarrier group #2 are adjacent, and the subcarrier group #2 and the subcarrier group #3 are adjacent, that is, a frequency of a subcarrier included in the subcarrier group #1 is less than a frequency of a subcarrier included in the subcarrier group #2, and the frequency of the subcarrier included in the subcarrier group #2 is less than a frequency of a subcarrier included in the subcarrier group #3. In addition, a subcarrier with a maximum frequency in the subcarrier group #1 and a subcarrier with a minimum frequency in the subcarrier group #2 are noncontiguous in frequency (or frequency domain), that is, there is an interval of K1 (K1$\geq$1) subcarriers between the two, or there are K1 subcarriers between the two. A subcarrier with a maximum frequency in the subcarrier group #2 and a subcarrier with a minimum frequency in the subcarrier group #3 are noncontiguous in frequency (or frequency domain), that is, there is an interval of K2 (K2$\geq$1) subcarriers between the two, or there are K2 subcarriers between the two. K1 may be equal to K2, or may not be equal to K2.

For another example, for a discrete RU including four discrete subcarrier groups (denoted as a subcarrier group #1, a subcarrier group #2, a subcarrier group #3, and a subcarrier group #4), the subcarrier group #1 and the subcarrier group #2 are adjacent, the subcarrier group #2 and the subcarrier group #3 are adjacent, and the subcarrier group #3 and the subcarrier group #4 are adjacent. In addition, a subcarrier with a maximum frequency in the subcarrier group #1 and a subcarrier with a minimum frequency in the subcarrier group #2 are spaced by K1 (K1$\geq$1) subcarriers, a subcarrier with a maximum frequency in the subcarrier group #2 and a subcarrier with a minimum frequency in the subcarrier group #3 are spaced by K2 (K2$\geq$1) subcarriers, and a subcarrier with a maximum frequency in the subcarrier group #3 and a subcarrier with a minimum frequency in the subcarrier group #4 are spaced by K3 (K3$\geq$1) subcarriers. K1, K2, and K3 may be equal. Alternatively, any two of the three may be equal or may be unequal.

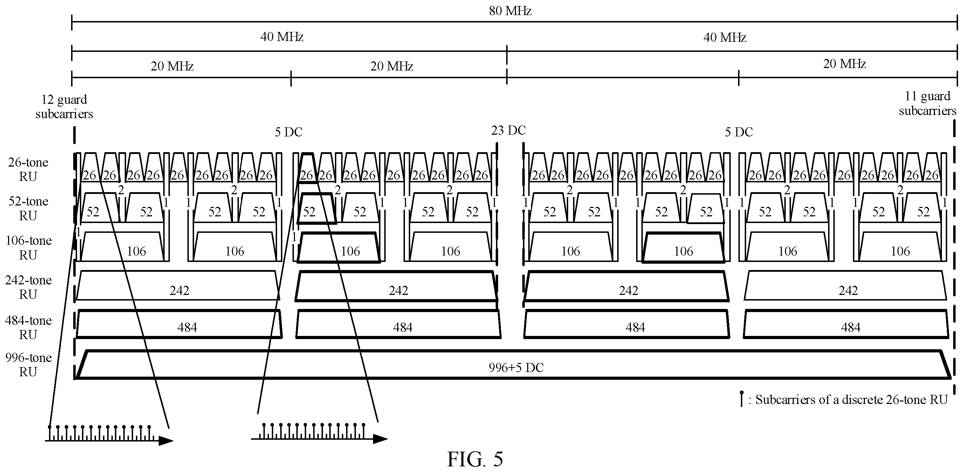

For example, refer to FIG. 5. A plurality of contiguous RUs corresponding to a discrete 26-tone RU shown in FIG. 5 are a first contiguous 26-tone RU (a contiguous RU #1) in first 20 MHz and a first contiguous 26-tone RU (a contiguous RU #2) in second 20 MHz. In this application, the discrete RU is a discrete RU corresponding to the contiguous RU #1 and the contiguous RU #2, the discrete RU is a discrete RU that has a mapping relationship with the contiguous RU #1 and the contiguous RU #2, or the contiguous RU #1 and the contiguous RU #2 are contiguous RUs occupied by the discrete RU.

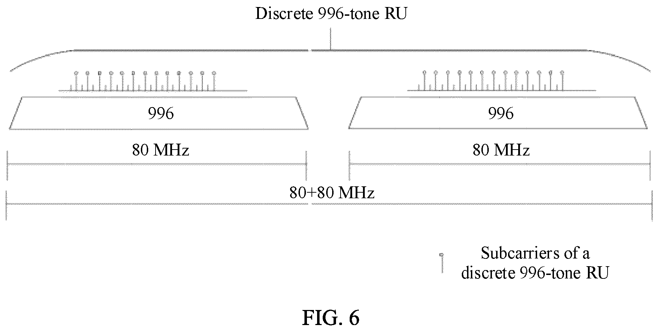

For another example, refer to FIG. 6. A plurality of contiguous RUs corresponding to a discrete 996-tone RU shown in FIG. 6 are two contiguous 996-tone RUs shown in the figure.

The Federal Communications Commission has issued a regulation on the 6 GHz spectrum, which defines an indoor low power (low power indoor, LPI) communication mode. This communication mode limits a maximum transmit power and a maximum frequency spectral density. For an AP, it is specified that a maximum transmit power of the AP is 36 dBm (decibel-milliwatts, decibel-milliwatts). and a maximum power spectral density is 5 dBm/MHz (decibel-milliwatts/-megahertz, decibel-milliwatts/megahertz). For a STA, it is specified that a maximum transmit power of the STA is 24 dBm, and a maximum power spectral density is -1 dBm/MHz.

Transmit power of a device is limited by both a maximum power and a maximum power spectral density. That is, the transmit power of the device cannot exceed the maximum power or the maximum power spectral density. That is, the transmit power per MHz cannot exceed a given value. For example, Table 1 shows a correspondence between a maximum power sent by a device and a bandwidth in an LPI scenario.

**Table 1**

| Bandwidth | Maximum transmit power of an AP | Maximum transmit power of a STA |
|-----------|--------------------------------|--------------------------------|
| 20 MHz | 18 dBm | 12 dBm |
| 40 MHz | 21 dBm | 15 dBm |
| 80 MHz | 24 dBm | 18 dBm |
| 160 MHz | 27 **dBm** | 21 dBm |
| 320 MHz | 30 **dBm** | 24 dBm |

It should be understood that, 20 MHz in Table 1 is used as an example, 18 dBm-5 dBm=13 dB, and 13 dB=10^1.3=19.95, which is approximately equal to 20 MHz. It can be learned that a maximum power in a transmit bandwidth is approximately equal to a value obtained when the maximum transmit power is reached in each MHz. When a power spectral density is limited, a corresponding transmit bandwidth may be expanded to enable the device to support higher transmit power. It can be learned from tone plans and RU distribution in FIG. 2 to FIG. 4 that all subcarriers in a bandwidth are contiguous, that is, RUs in FIG. 2 to FIG. 4 are contiguous RUs. Compared with the discrete RU, each subcarrier included in the contiguous RU corresponds to a smaller bandwidth, and therefore the maximum transmit power of the device cannot be increased by using the transmit bandwidth. For example, the 20 MHz includes two subcarriers that belong to the 20 MHz and a plurality of subcarriers that belong to another RU. Compared with 20 MHz including 10 contiguous subcarriers, although a quantity of subcarriers allocated to the device is not increased, the subcarriers allocated to the device become more discrete in frequency domain, so that a quantity of subcarriers in each MHz is reduced. From a perspective of the subcarrier, it is equivalent to broadening a bandwidth corresponding to each subcarrier. Therefore, the device can support higher transmit power.

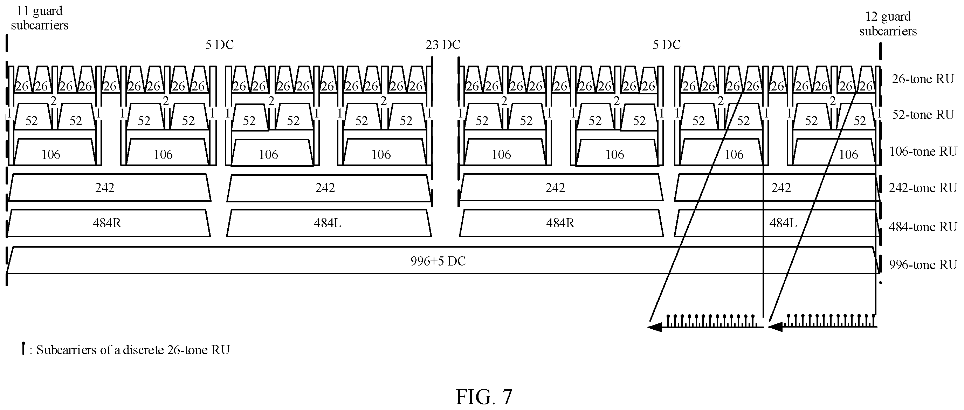

For example, FIG. 7 is a schematic diagram of distribution of a 26-tone RU with discrete subcarriers. In FIG. 7, 80 MHz is used as an example. The 26-tone RU includes 24 data subcarriers and two pilot subcarriers. The 24 data subcarriers may be designed in a form of two non-adjacent data subcarriers, as shown in FIG. 7.

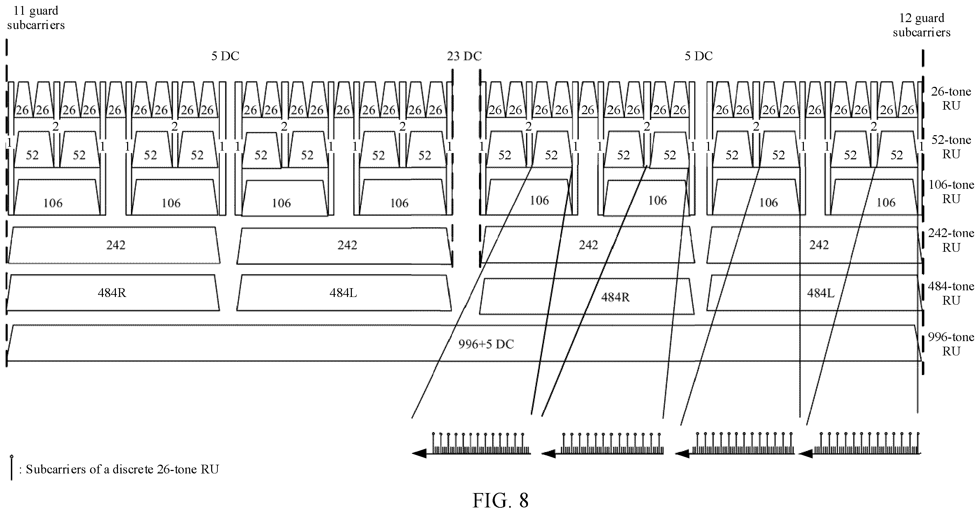

For another example, FIG. 8 is a schematic diagram of distribution of a 52-tone RU with discrete subcarriers. In FIG. 8, 80 MHz is used as an example. The 52-tone RU includes 48 data subcarriers and four pilot subcarriers. The 48 data subcarriers may be designed in a form of two non-adjacent data subcarriers, as shown in FIG. 8. It should be noted that the discrete distribution (discrete design) manners of the data subcarriers in FIG. 7 and FIG. 8 are merely examples. Discrete distribution of the data subcarrier is not limited in this embodiment of this application.

It can be seen from FIG. 7 and FIG. 8 that, because the data subcarriers on the RU are discretely distributed, a quantity of subcarriers in each MHz is reduced. From a perspective of the subcarrier, it is equivalent to broadening a bandwidth corresponding to each subcarrier. Therefore, each subcarrier may support higher transmit power. However, in the manner shown in FIG. 7 or FIG. 8, more RUs or RU combinations need to be defined, for example, RUs or RU combinations formed by various discrete subcarriers. In addition, to indicate more types of RUs or MRUs (including the RUs or RU combinations formed by the various discrete subcarriers), an existing method for allocating an RU formed by contiguous subcarriers needs to be changed, and implementation is complex for a transmit end. In addition, in a possible case, for example, there may be an intersection between some predefined discrete subcarrier sets, and then a discrete RU (for example, an x-tone RU) is allocated, and another discrete RU (for example, a y-tone RU) cannot be used for sending. For another example, if preamble puncturing occurs, the predefined RU cannot be used, and RU utilization is low.

In view of this, this application provides a resource allocation method. The method is essentially to provide a mapping manner from a VRU to a PRU. In the mapping manner, a contiguous VRU may be mapped to a discrete PRU. Based on this mapping manner, a transmit end may notify a receive end that an RU allocated to the receive end is a VRU, but the transmit end sends data on the discrete PRU to which the contiguous VRU is mapped. Because the contiguous VRU is mapped to the discrete PRU, it is equivalent to reducing a quantity of subcarriers in each MHz, so that the transmit end can support higher transmit power.

It should be noted that, in this embodiment of this application, a subcarrier that needs to be discrete is a subcarrier (also referred to as a data subcarrier in this specification) used to carry data. For any RU, distribution of another subcarrier included in the RU, for example, a pilot subcarrier, is not limited. For example, a conventional design or another possible design may be used for distribution of the pilot subcarrier.

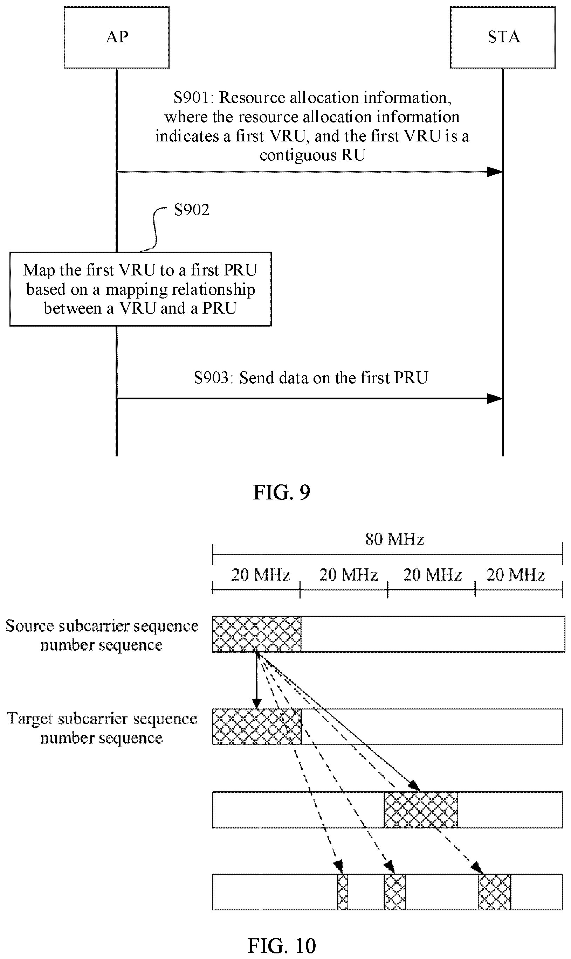

The technical solutions provided in embodiments of this application are described below in detail with reference to the accompanying drawings. In the following description, an example in which the transmit end is a first device and the receive end is a second device is used to describe how the first device indicates an allocated resource to the second device. The first device may be an AP, and the second device may be a STA or an AP, or the first device may be a STA, and the second device may also be a STA. For ease of description, in the following, an example in which the first device is an AP and the second device is a STA is used. FIG. 9 is a schematic flowchart of a resource allocation method according to an embodiment of this application. The procedure is described as follows.

S901: The AP sends resource allocation information to the STA, and correspondingly the STA receives the resource allocation information from the AP, where the resource allocation information indicates a first VRU, and the first VRU is a contiguous RU.

S902: The AP maps the first VRU to a first PRU based on a mapping relationship between a VRU and a PRU.

S903: The AP sends data on the first PRU, and the STA receives the data on the first PRU.

Generally, a resource allocated by the AP to the STA is the contiguous RU. To enable the AP to obtain higher transmit power, in this application, the contiguous RU may be mapped to a discrete RU, and the AP sends data to the STA on the discrete RU, so that the AP can obtain higher transmit power. It should be understood that the AP sends the data to the STA on the discrete RU, and the STA receives the data from the AP on the discrete RU, or may send data to the AP on the discrete RU. That is, the STA does not receive or send data on the contiguous RU allocated by the AP to the STA. It may be considered that the contiguous RU allocated by the AP to the STA is a VRU, and the discrete RU is a PRU. It may be considered that this embodiment of this application essentially provides a solution in which the VRU is mapped to the PRU. In this way, the transmit end may use a resource allocation manner in which a bandwidth is divided into several resource units, and there is no need to define a plurality of distributed RUs or care about how to select and allocate the distributed RU, so that maximum transmit power of a device can be increased.

In this embodiment of this application, the AP may continue to use a current RU allocation manner, that is, a resource is allocated by using a resource unit allocation subfield (RU Allocation subfield). Generally, the AP allocates a resource to the STA by using the resource unit allocation subfield, and the STA considers that the allocated resource is a physical resource. For example, the AP sends resource allocation information to the STA, where the resource allocation information is carried in a resource unit allocation subfield, and indicates an RU allocated by the AP to the STA. However, in this embodiment of this application, the resource allocated to the STA by using the resource unit allocation subfield is not a resource actually used by the AP to send the data. Therefore, when allocating the resource to the STA, the AP notifies the STA that the resource allocated by the AP to the STA is a VRU. For example, the AP may send resource allocation information to the STA, where the resource allocation information indicates that the RU allocated by the AP to the STA is the first VRU. For example, the resource allocation information may be carried in a resource allocation subfield. For example, the resource allocation information may be a reserved bit sequence of the resource allocation subfield. Alternatively, the resource allocation information may be carried in a signaling field (signal field, SIG) included in a physical layer protocol data unit (physical protocol data unit, PPDU), for example, some bits in a universal field (universal SIG, U-SIG) or in an extremely high throughput signaling field (extremely high throughput signal field, EHT-SIG), for example, a reserved bit such as a validate (validate) bit.

Before sending the data to the STA, the AP needs to map the VRU to the PRU, to send the data on the PRU. It should be understood that the AP may allocate a VRU to one STA, or may simultaneously allocate VRUs to a plurality of STAs. For example, the AP allocates a first VRU to a STA 1, and allocates a second VRU to a STA 2. In this case, the AP may simultaneously map the first VRU and the second VRU. For example, the AP maps frequency-domain resources on which the first VRU and the second VRU are located. For ease of description, the following uses an example in which the AP maps a first frequency-domain resource on which the first VRU is located. It should be understood that the first frequency-domain resource may further include one or more other VRUs. It should be noted that the AP may allocate VRUs to some STAs, and may also allocate PRUs to the other STAs. For example, the AP allocates a first VRU to a first STA, and allocates a second PRU to a second STA. The first VRU and the second PRU are located on the first frequency-domain resource. A solution in which the VRU is mapped to the PRU provided in this embodiment of this application may be applied to downlink transmission (that is, transmission from the AP to the STA), or may be applied to uplink transmission (that is, transmission from the STA to the AP). The solution in which the VRU is mapped to the PRU may be used in combination with the solution in which the AP allocates any resource to the STA by using the resource unit allocation subfield.

In this embodiment of this application, a purpose of mapping the VRU to the PRU is to make subcarriers more discrete, and both the VRU and the PRU may be indicated by using sequence numbers of the subcarriers. For details, refer to the following Appendix 1 to Appendix 5. Therefore, in this embodiment of this application, a subcarrier sequence number sequence corresponding to the first frequency-domain resource may be mapped, that is, the subcarrier sequence number sequence (a source subcarrier sequence number sequence) is mapped to another subcarrier sequence number sequence (a target subcarrier sequence number sequence). That is, sequence numbers in the source carrier sequence number sequence are mapped to corresponding elements in the target subcarrier sequence number sequence one by one.

A sequence number of each subcarrier may be a subcarrier number of the subcarrier in a corresponding actual frequency band, or may be self-defined. A specific implementation form of the sequence number of the subcarrier is not limited in this embodiment of this application.

For example, the sequence number of the subcarrier may be the subcarrier number of the subcarrier in the corresponding actual frequency band. For example, sequence numbers of 242 subcarriers corresponding to first 20 MHz in 80 MHz are sequentially -500 to -259, sequence numbers of 242 subcarriers corresponding to second 20 MHz are sequentially -253 to -12, sequence numbers of 242 subcarriers corresponding to third 20 MHz are 12 to 253, and sequence numbers of 242 subcarriers corresponding to fourth 20 MHz are sequentially 259 to 500.

For example, the sequence number of the subcarrier may be numbered from 0 or 1. For example, sequence numbers of 242 subcarriers corresponding to first 20 MHz in 80 MHz are 0 to 241, or 1 to 242.

For example, the sequence number of the subcarrier is a preset sequence number plus a preset offset value. For example, the preset sequence number may be numbered from 0 or 1, and the preset offset value may be determined based on the subcarrier number of the subcarrier in the corresponding actual frequency band. For example, sequence numbers of 242 subcarriers corresponding to first 20 MHz in 80 MHz may be calculated based on preset sequence numbers and a preset offset value. Assuming that the preset sequence number is 1, the preset offset value may be -501.

It should be noted that ranges in which the VRU and the PRU participate in mapping are not limited in this embodiment of this application. In other words, the first VRU and the first PRU may be in a same frequency-domain location range, or may be in different frequency-domain location ranges. In addition, in this embodiment of this application, whether a frequency range in which the PRU participates in mapping is contiguous is not limited. In other words, the frequency-domain range in which the PRU participates in mapping may be contiguous, or may be discrete, provided that a size of the frequency range in which the PRU participates in mapping is the same as a size of a frequency range in which the VRU participates in mapping.

It may also be considered that a set in which the source subcarrier sequence number sequence is located and a set in which the target subcarrier sequence number sequence is located are not limited in this embodiment of this application. For example, a sequence number in the subcarrier sequence number sequence corresponding to the first frequency-domain resource may be mapped to another sequence number in a same set. For example, if the source subcarrier sequence number sequence is located in a first set, the target subcarrier sequence number sequence is also located in the first set. Alternatively, a sequence number in the subcarrier sequence number sequence corresponding to the first frequency-domain resource may be mapped to another sequence number in another set. For example, if the source subcarrier sequence number sequence is located in a first set, the target subcarrier sequence number sequence is also located in a second set, and there is no intersection between the first set and the second set. For another example, if the source subcarrier sequence number sequence is located in a first set, the target subcarrier sequence number sequence is located also in a second set, and some sequence numbers in the second set are the same as those in the first set. Similarly, whether the target subcarrier sequence number sequence is contiguous is not limited in this embodiment of this application. In other words, sequence numbers included in the target subcarrier sequence number sequence may be located in different sets. For example, if the source subcarrier sequence number sequence is located in a first set, the target subcarrier sequence number sequence may be located in a plurality of second sets, there is no intersection between the plurality of second sets, and there is no intersection between the first set and the plurality of second sets, or there is an intersection between the first set and some second sets in the plurality of second sets.

For example, FIG. 10 is a schematic diagram of frequency ranges in which the VRU and the PRU participate in mapping. The source subcarrier sequence number sequence may correspond to first 20 MHz in the 80 MHz, and the target subcarrier sequence number sequence may also correspond to the first 20 MHz in the 80 MHz; the source subcarrier sequence number sequence may correspond to first 20 MHz in the 80 MHz, and the target subcarrier sequence number sequence may correspond to third 20 MHz in the 80 MHz, to represent the first frequency-domain resource; or the source subcarrier sequence number sequence may correspond to first 20 MHz in the 80 MHz, and the target subcarrier sequence number sequence may correspond to some frequencies in second 20 MHz in the 80 MHz, some frequencies in third 20 MHz in the 80 MHz, and some frequencies in fourth 20 MHz in the 80 MHz.

In other words, if the source subcarrier sequence number sequence is located in {-500, ..., -259}, the target subcarrier sequence number sequence may be located in {-500, ..., -259}; if the source subcarrier sequence number sequence is located in {-500, ..., -259}, the target subcarrier sequence number sequence may be located in {-253, ..., - 12}; or if the source subcarrier sequence number sequence is located in {-500, ..., -259}, the target subcarrier sequence number sequence may be located in {-253, ..., -106}, {50, ..., 88}, and {270, ..., 326}.

The following uses an example in which the first VRU and the first PRU participate in mapping in a same frequency range, to describe several possible mapping manners in which the VRU is mapped to the PRU.

Mapping manner 1: In this embodiment of this application, the VRU may be mapped to the PRU by using an interleaving matrix.

A row quantity of the interleaving matrix may be predefined, and a column quantity of the interleaving matrix is an integer obtained by dividing a quantity of subcarriers to be input by the AP by the row quantity of the interleaving matrix. That is, if a value obtained by dividing the quantity of subcarriers to be input by the AP by the row quantity of the interleaving matrix is a decimal, the column quantity of the interleaving matrix is a rounded-up value obtained by dividing the quantity of subcarriers to be input by the AP by the row quantity of the interleaving matrix. Alternatively, a column quantity of the interleaving matrix may be predefined, and a row quantity of the interleaving matrix is an integer obtained by dividing a quantity of subcarriers to be input by the AP by the column quantity of the interleaving matrix. That is, if a value obtained by dividing the quantity of subcarriers to be input by the AP by the column quantity of the interleaving matrix is a decimal, the row quantity of the interleaving matrix is a rounded-up value obtained by dividing the quantity of subcarriers to be input by the AP by the column quantity of the interleaving matrix. It should be noted that a specific implementation of the row quantity and the column quantity of the interleaving matrix is not limited in this embodiment of this application. For example, both the row quantity and the column quantity of the interleaving matrix may be predefined, or the row quantity and the column quantity of the interleaving matrix may be negotiated by the AP and the STA.

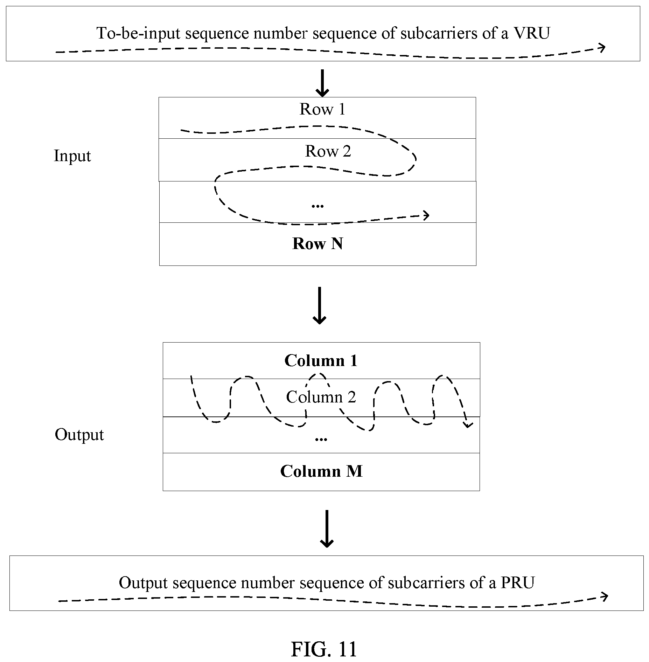

In other words, row-column transformation is performed, by using the interleaving matrix, on sequence numbers of a plurality of subcarriers, and sequence numbers obtained by performing row-column transformation on the plurality of subcarriers are output. That is, a sequence number of a subcarrier of the first VRU is mapped to a sequence number of a subcarrier of the first PRU based on the interleaving matrix. FIG. 11 shows a mapping manner from a VRU to a PRU. In FIG. 11, an example in which a row quantity of the interleaving matrix is N and a column quantity is M is used. In FIG. 11, an example in which sequence numbers of subcarriers are input into the interleaving matrix by row and output from the interleaving matrix by column is used. That is, the AP may sequentially input, according to a first order, sequence numbers of a plurality of subcarriers included in a first frequency-domain resource into rows of an interleaver (the interleaving matrix), and outputs sequence numbers of the subcarriers included the interleaving matrix according to a column direction of the interleaving matrix. Alternatively, the AP may sequentially input, according to a first order, sequence numbers of a plurality of subcarriers included in a first frequency-domain resource into columns of an interleaver (the interleaving matrix), and outputs sequence numbers of the subcarriers included the interleaving matrix according to a row direction of the interleaving matrix. For ease of description, the following uses an example in which sequence numbers of subcarriers are input into the interleaving matrix by row and output from the interleaving matrix by column.

For example, a sequence number i of a subcarrier of the first PRU mapped from a subcarrier with a sequence number k of the first VRU based on the interleaving matrix satisfies the following formula:

$$i = N_{\mathrm{ROW}} \cdot (k \bmod N_{\mathrm{COL}}) + \left\lfloor \frac{k}{N_{\mathrm{COL}}} \right\rfloor,$$

where

$N_{\mathrm{ROW}}$ is a row quantity of the interleaving matrix, $N_{\mathrm{COL}}$ is a column quantity of the interleaving matrix, k is a sequence number of a subcarrier that is input into the interleaving matrix, and i is a sequence number obtained by interleaving a subcarrier whose sequence number is k by using the interleaving matrix.

The first order is an ascending order, the first order is a descending order, or the first order is an order obtained through resorting in ascending order or in descending order according to a preset rule. For example, there are n subcarriers in total, sequence numbers (that is, n sequence numbers) of the n subcarriers are sorted in ascending order, and the first order is an order obtained by shifting m sequence numbers selected from the n sequence numbers before a minimum sequence number. For example, a sequence number sequence of a subcarrier is 123456, and a first order is 345612. The following uses an example in which the first order is an ascending order.

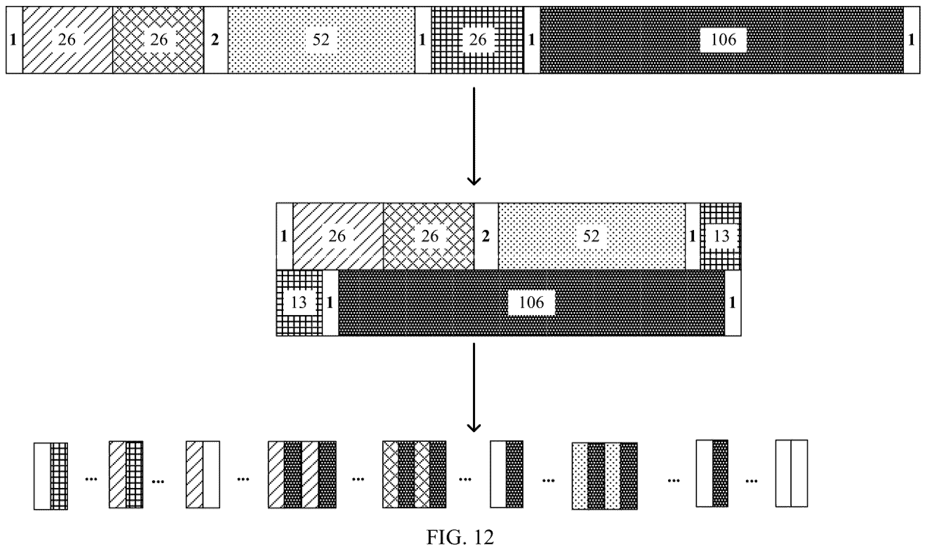

For example, FIG. 12 shows mapping from a VRU to a PRU in 20 MHz. The 20 MHz in FIG. 12 may be, for example, any 20 MHz in 40 MHz, 80 MHz, or 160 MHz. A number in each rectangle in FIG. 12 indicates a quantity of subcarriers. In FIG. 12, that 242 subcarriers included in the 20 MHz participate in mapping and a row quantity of the interleaving matrix is 2 is used as an example. It can be learned from FIG. 12 that most subcarriers represented by a same shadow part are not adjacent. To be specific, a plurality of contiguous subcarriers included in the 20 MHz should become discrete after mapping. In other words, although subcarriers in each VRU are contiguous in the VRU, the subcarriers become discrete after mapping. In this mapping manner, the VRU formed by the contiguous subcarriers may be mapped to a PRU formed by the discrete subcarriers, which is equivalent to broadening a bandwidth corresponding to each subcarrier. Therefore, although the AP still uses a current RU allocation manner to allocate a resource to the STA, the AP may also obtain higher transmit power. In addition, for the AP, the current RU allocation manner is still used, and there is no need to define a plurality of distributed RUs and care about how to select and allocate the distributed RU.

All the 242 subcarriers (that is, all subcarriers) in the 20 MHz (the first frequency-domain resource) shown in FIG. 12 participate in mapping. That is, both first-type subcarriers and a second-type subcarrier that are included in the first frequency-domain resource participate in mapping. It should be understood that this embodiment of this application is intended to discrete the first-type subcarriers. Therefore, in some embodiments, the second-type subcarrier may not participate in mapping, that is, only the first-type subcarriers included in the first frequency-domain resource are mapped. Certainly, all the first-type subcarriers included in the first frequency-domain resource may participate in mapping, or some first-type resources included in the first frequency-domain resource may participate in mapping. This is not limited in this embodiment of this application. In this way, content of the interleaving matrix may be less, thereby improving interleaving efficiency. The following describes several mapping manners in which the second-type subcarrier does not participate in mapping.

Example 1: A sequence number of the second-type subcarrier is not input into an interleaving matrix.

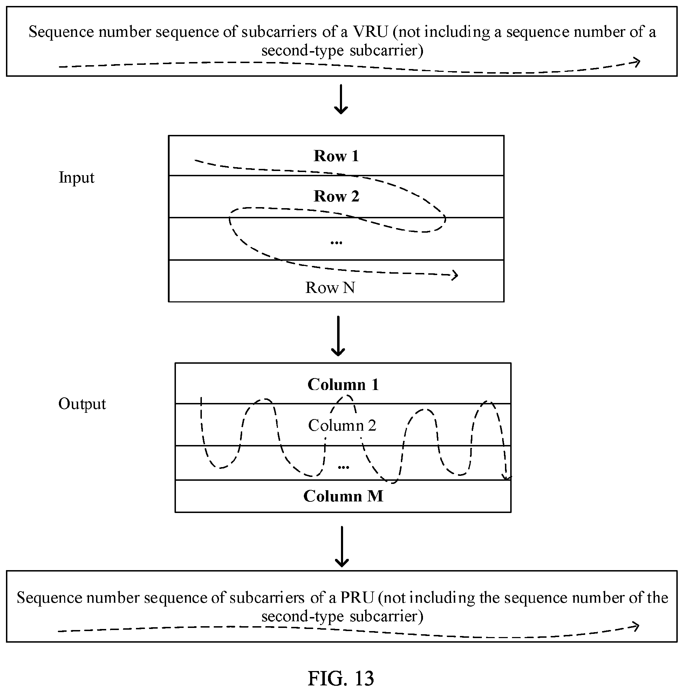

FIG. 13 is a schematic diagram in which the second-type subcarrier does not participate in mapping. For example, a sequence number sequence obtained in ascending order of sequence numbers of subcarriers included in the first frequency-domain resource is {1, 2, 3, 4, 5, 6, 7, 8, 9, 10}, and sequence numbers of the second-type subcarrier are 5 and 6. Because the second-type subcarrier does not participate in mapping, when the first frequency-domain resource is mapped, {1, 2, 3, 4, 7, 8, 9, 10} may be input into the interleaving matrix. It is assumed that a row quantity of the interleaving matrix is 2, and a column quantity is 4 (that is, N=2, M=4). In this case, elements in a first row of the interleaving matrix are sequentially {1, 2, 3, 4}, and elements in a second row are sequentially {7, 8, 9, 10}. Sequence numbers of subcarriers obtained through output by column are {1, 7, 2, 8, 3, 9, 4, 10}. That is, subcarriers whose sequence numbers are {1, 2, 3, 4, 7, 8, 9, 10} in the VRU are in a one-to-one correspondence with subcarriers whose sequence numbers are {1, 7, 2, 8, 3, 9, 4, 10} in the PRU. Because subcarriers whose sequence numbers are 5 and 6 do not participate in mapping, sequence numbers of the subcarriers whose sequence numbers are 5 and 6 in the PRU are still 5 and 6.

For example, sequence numbers of 242 subcarriers corresponding to first 20 MHz in 80 MHz are -500 to - 259, there are 18 pilot subcarriers in the first 20 MHz in 80 MHz, and sequence numbers of the pilot subcarriers are: sequence numbers in {-238, -224, -212, -198, -184, -170, -158, -144, -130, -116, -104, -90, -78, -64, -50, -36, -24, -10} plus an offset value (that is, -256), that is, {-494, -480, -468, -454, -440, -426, -414, -400, -386, -372, -360, - 346, -334, -320, -306, -292, -280, -266}.

During mapping of the first 20 MHz in the 80 MHz, it may be determined that the 18 pilot subcarriers do not participate in mapping. That is, the 18 pilot subcarriers are not input into the interleaving matrix, and a quantity of subcarriers participating in mapping is 242-18=224 subcarriers. In this case, an 8*28 matrix may be designed as the interleaving matrix. In this case, subcarriers participating in mapping are input into the interleaving matrix, as shown in Table 2. It should be understood that all blank parts in the table are corresponding to subcarrier sequence numbers. For brevity, Table 2 shows only some subcarrier sequence numbers.

**Table 2**

| | | | | | | | | | | | | | | | | | | | | | | | | | | | |
|---|---|---|---|---|---|---|---|---|---|---|---|---|---|---|---|---|---|---|---|---|---|---|---|---|---|---|---|
| −500 | −499 | −498 | −497 | −496 | **−495** | **−493** | −492 | −491 | | | | | | | | | | | | | | | | | | | −471 |
| −470 | −469 | −467 | | | | | | | | | | | | | | | | | | | | | | | | | −441 |
| −439 | | | | | | | | | | | | | | | | | | | | | | | | | | | −410 |
| −409 | | | | | | | | | | | | | | | | | | | | | | | | | | | −380 |
| −379 | | | | | | | | | | | | | | | | | | | | | | | | | | | −350 |
| −349 | | | | | | | | | | | | | | | | | | | | | | | | | | | −319 |
| −318 | | | | | | | | | | | | | | | | | | | | | | | | | | | −289 |
| −288 | | | | | | | | | | | | | | | | | | | | | | | | | | −260 | −259 |

Sequence numbers of rows are sequentially output in a column output direction, to obtain subcarrier sequence numbers after mapping. It can be learned that contiguous subcarrier sequence numbers may be discrete by using the interleaving matrix. That is, elements in a subcarrier sequence number set {-500, -499, ..., -259} of the VRU are in a one-to-one correspondence with elements in the following sequences: {-500, -470, -439, -409, -379, -349, -318, - 288, -499, ..., -289, -259}.

Example 2: Both sequence numbers of the first-type subcarriers and a sequence number of the second-type subcarrier that are included in the first time-frequency resource are input into an interleaving matrix, but after processing by the interleaving matrix, the sequence numbers of the first-type subcarriers in the interleaving matrix are output, and the sequence number of the second-type subcarrier is not output. That is, the sequence numbers of the subcarriers output from the interleaving matrix do not include the sequence number of the second-type subcarrier. To distinguish which sequence numbers are output and which sequence numbers are not output, the sequence number of the second-type subcarrier may be uniformly defined as a first preset sequence number, for example, "*".

In some embodiments, in a sequence number sequence obtained based on the sequence numbers of the plurality of subcarriers included in the first time-frequency resource that are sorted according to the first order, the sequence number of the second-type subcarrier may be replaced with "*", and then the obtained sequence number sequence is sequentially input into rows of the interleaving matrix. In other words, it may be considered that after the sequence numbers of the plurality of subcarriers included in the first time-frequency resource are input into the interleaving matrix by row according to the first order, the sequence number of the second-type subcarrier that does not participate in mapping in the interleaving matrix is replaced with "*".

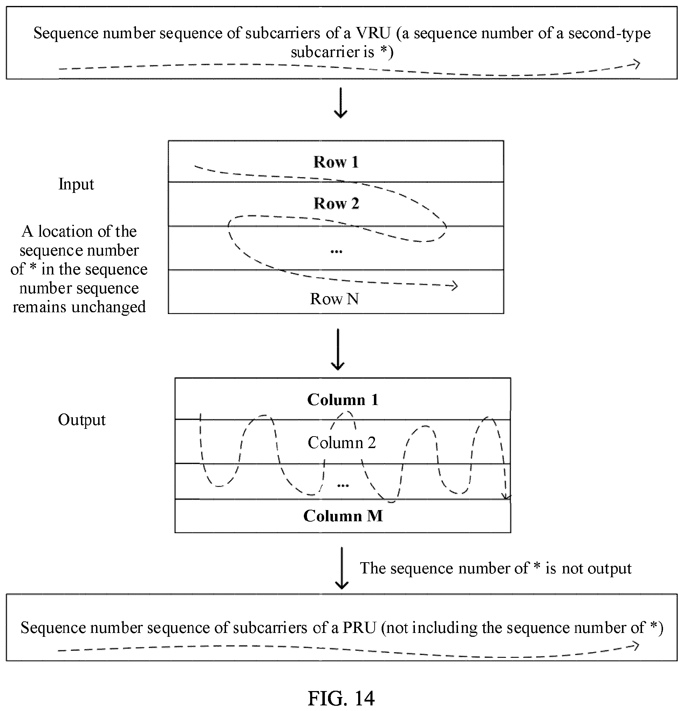

For example, FIG. 14 shows another example in which the second-type subcarrier does not participate in mapping. For example, the foregoing example is still used, that is, a row quantity of the interleaving matrix is 2, and a column quantity is 4. A sequence number sequence obtained in ascending order of sequence numbers of subcarriers included in the first frequency-domain resource is {1, 2, 3, 4, 5, 6, 7, 8, 9, 10}, and sequence numbers of the second-type subcarrier are 5 and 6. Because the second-type subcarrier participates in mapping, but the sequence number of the second-type subcarrier is not output after being processed by the interleaving matrix, the sequence number of the second-type subcarrier may be defined as "*". When the first frequency-domain resource is mapped, {1, 2, 3, 4, *, *, 7, 8, 9, 10} may be input into the interleaving matrix. That is, elements in a first row of the interleaving matrix are sequentially {1, 2, 3, 4, *}, and elements in a second row are sequentially {7, 8, 9, 10, *}. Because the sequence number of "*" is not output, sequence numbers of subcarriers obtained through output by column are {1, 7, 2, 8, 3, 9, 4, 10}. That is, subcarriers whose sequence numbers are {1, 2, 3, 4, 7, 8, 9, 10} in the VRU are in a one-to-one correspondence with subcarriers whose sequence numbers are {1, 7, 2, 8, 3, 9, 4, 10} in the PRU. Sequence numbers of the subcarriers whose sequence numbers are 5 and 6 in the PRU are still 5 and 6.

In some other embodiments, in a sequence number sequence obtained based on the sequence numbers of the plurality of subcarriers included in the first time-frequency resource that are sorted according to the first order, the sequence number of the second-type subcarrier may be replaced with "*". However, the sequence number of the second-type subcarrier is input into a preset location of the interleaving matrix, and the sequence numbers of the first-type subcarriers are sequentially input, according to the first order, into locations other than the location occupied by the sequence number of the second-type subcarrier in rows of the interleaving matrix. For example, it may be specified that the sequence number of * is sequentially input into a last column of each row of the interleaving matrix, the sequence number of * is sequentially input into a first column of each row of the interleaving matrix, or the sequence number of * is sequentially input into a location obtained according to a preset rule in the interleaving matrix. A specific location of the sequence number of the second-type subcarrier in the interleaving matrix is not limited in this embodiment of this application.

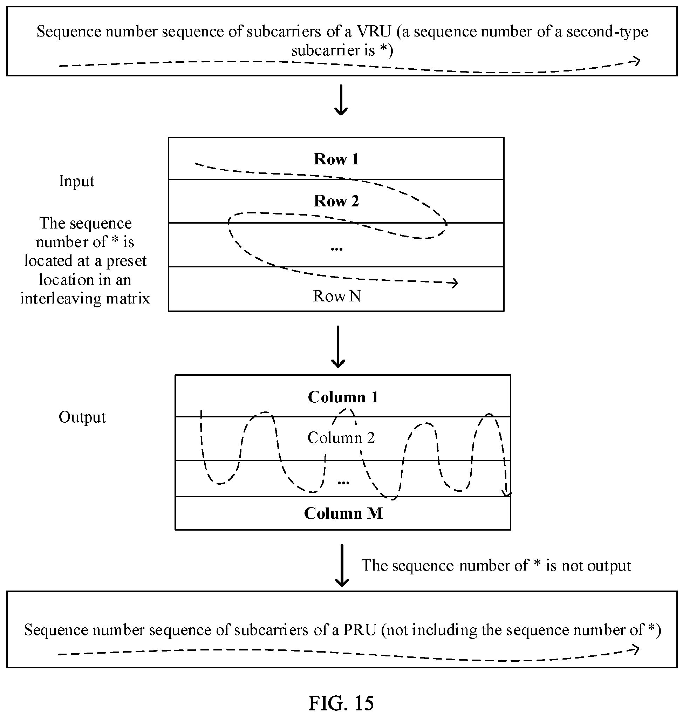

For example, FIG. 15 shows still another example in which the second-type subcarrier does not participate in mapping. The foregoing example is still used, that is, a row quantity of the interleaving matrix is 2, and a column quantity is 4. A sequence number sequence obtained in ascending order of sequence numbers of subcarriers included in the first frequency-domain resource is {1, 2, 3, 4, 5, 6, 7, 8, 9, 10}, and sequence numbers of the second-type subcarrier are 5 and 6. Because the second-type subcarrier participates in mapping, but the sequence number of the second-type subcarrier is not output after being processed by the interleaving matrix, the sequence number of the second-type subcarrier may be defined as "*". It may be specified that the sequence number of * may be sequentially input into a last column of each row of the interleaving matrix. When the first frequency-domain resource is mapped, {1, 2, 3, 4, *, *, 7, 8, 9, 10} is input into the interleaving matrix. That is, elements in a first row of the interleaving matrix are sequentially {1, 2, 3, 4, *}, and elements in a second row are sequentially {7, 8, 9, 10, *}. Because the sequence number of "*" is not output, sequence numbers of subcarriers obtained through output by column are {1, 7, 2, 8, 3, 9, 4, 10}. That is, subcarriers whose sequence numbers are {1, 2, 3, 4, 7, 8, 9, 10} in the VRU are in a one-to-one correspondence with subcarriers whose sequence numbers are {1, 7, 2, 8, 3, 9, 4, 10} in the PRU. Sequence numbers of the subcarriers whose sequence numbers are 5 and 6 in the PRU are still 5 and 6.

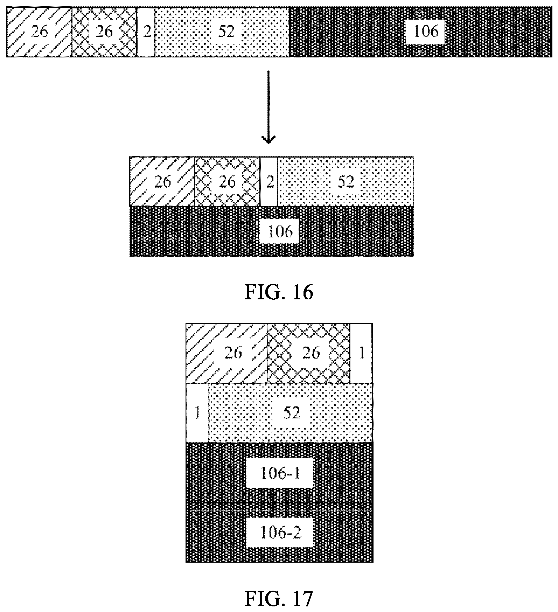

For example, FIG. 16 shows an example in which a VRU of 20 MHz in 80 MHz is mapped to a PRU. In FIG. 15, an example in which a row quantity of the interleaving matrix is 2 and some first-type subcarriers participate in mapping is used, that is, the second-type subcarrier does not participate in mapping, and some first-type subcarriers participate in mapping. The second-type subcarrier that does not participate in mapping is a null subcarrier, that is, the second-type subcarrier that does not participate in mapping includes one null subcarrier on a left side and a right side of a 26-tone RU adjacent to a 106-tone RU, one null subcarrier on a left side of a first 26-tone RU, and one null subcarrier on a right side of the 106-tone RU. First-type subcarriers that do not participate in mapping are all subcarriers included in the 26-tone RU adjacent to the 106-tone RU. It can be learned from FIG. 16 that a quantity of subcarriers participating in mapping is 242-2-2-26=212, that is, content of the interleaving matrix is less, thereby improving interleaving efficiency.

FIG. 17 shows another example in which a VRU of 20 MHz in 80 MHz is mapped to a PRU. A difference between FIG. 17 and FIG. 16 lies in that, in FIG. 17, that a row quantity of the interleaving matrix is 4 is used as an example. It should be understood that 106-1 and 106-2 in FIG. 17 show two parts of 106 subcarriers.

It should be noted that, in FIG. 16 and FIG. 17, that the second-type subcarrier that does not participate in mapping is the null subcarrier is used as an example. Which type of subcarrier of the second-type subcarrier is not limited in this embodiment of this application. For example, the second-type subcarrier may also be a direct current subcarrier, may be a pilot subcarrier, or may be at least one of a null subcarrier, a direct current subcarrier, a guard subcarrier, or a pilot subcarrier.

For example, sequence numbers of 242 subcarriers corresponding to first 20 MHz in 80 MHz are -500 to - 259, there are 18 pilot subcarriers in the first 20 MHz in 80 MHz, and sequence numbers of the pilot subcarriers are: sequence numbers in {-238, -224, -212, -198, -184, -170, -158, -144, -130, -116, -104, -90, -78, -64, -50, -36, -24, -10} plus an offset value (that is, -256), that is, {-494, -480, -468, -454, -440, -426, -414, -400, -386, -372, -360, - 346, -334, -320, -306, -292, -280, -266}.

During mapping of the first 20 MHz in the 80 MHz, it may be determined that the 18 pilot subcarriers do not participate in mapping. For example, sequence numbers of the 18 pilot subcarriers are input into the interleaving matrix, but the sequence numbers of the 18 pilot subcarriers are not output during output. In this case, the interleaving matrix may be designed as an 8*32 matrix, and subcarriers participating in mapping are input into the interleaving matrix, as shown in Table 3. Gray parts in Table 3 are sequence numbers of pilot subcarriers. It should be understood that all blank parts in the table are corresponding to subcarrier sequence numbers. For brevity, Table 3 shows only some subcarrier sequence numbers.

**Table 3**

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| −500 | | | | | | | | | | | | | | | | | | | | | | | | | | | | | | | −469 |
| −468 | | | | | | | | | | | | | | | | | | | | | | | | | | | | | | | −437 |
| −436 | | | | | | | | | | | | | | | | | | | | | | | | | | | | | | | −405 |
| −404 | | | | | | | | | | | | | | | | | | | | | | | | | | | | | | | −373 |
| −372 | | | | | | | | | | | | | | | | | | | | | | | | | | | | | | | −341 |
| −340 | | | | | | | | | | | | | | | | | | | | | | | | | | | | | | | −309 |
| −308 | | | | | | | | | | | | | | | | | | | | | | | | | | | | | | | −277 |
| −276 | | | | | | | | | | | | | | | | | | | | | | | | | | | | | | | −245 |

Sequence numbers in the interleaving matrix are output by column, that is, a subcarrier sequence number set of the VRU is {-500, -499, ..., and -259}-{-494, -480, -468, -454, -440, -426, -414, -400, -386, -372, -360, -346, -334, -320, -306, -292, -280, -266}, and is in a one-to-one correspondence with elements in the following sequences: {-500, -436, -404, -340, ..., -277}.

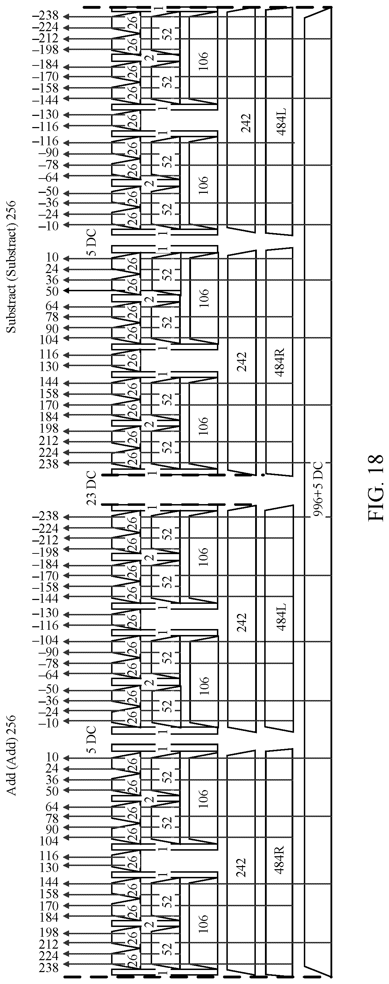

It should be understood that, for the pilot subcarrier, quantities of locations of the pilot subcarriers on different RUs are different. For example, FIG. 18 shows locations of pilot subcarriers in 80 MHz. It can be learned from FIG. 18 that a pilot subcarrier set of a 26-tone RU in any 20 MHz also includes pilot subcarriers of a 52-tone RU and a 106-tone RU in 20 MHz. To enable all RUs in an interleaving range (the first frequency-domain resource) can satisfy that pilot locations after mapping can remain unchanged regardless of which pilot subcarriers are selected. In this embodiment of this application, a maximum pilot set in the interleaving range may be set as a pilot subcarrier set that does not participate in mapping. For example, the pilot subcarrier that does not participate in mapping is a maximum pilot subcarrier set in the 26-tone RU in the first frequency-domain resource. In this way, mapping of the 26-tone RU, the 52-tone RU, or the 106-tone RU may be randomly selected in the range of 20 MHz, and original locations of the pilot subcarriers in the VRU and the PRU are not changed.

It should be noted that if a quantity of the subcarriers that are input into the interleaving matrix and that are in the plurality of subcarriers included in the first frequency-domain resource is less than a quantity of subcarriers that are input into the interleaving matrix and that are supported by the interleaving matrix, for example, a sequence number sequence obtained in ascending order of sequence numbers of subcarriers included in the first frequency-domain resource is {1, 2, 3, 4, 5, 6, 7, 8, 9, 10}, and the interleaving matrix is a matrix with two rows and six columns, the AP may input the sequence numbers of the plurality of subcarriers included in the first frequency-domain resource and a sequence number of a padding subcarrier into the interleaving matrix. The sequence number of the padding subcarrier is not output after being processed by interleaving matrix, that is, the padding subcarrier does not participate in mapping. To distinguish the padding subcarrier from the first-type subcarrier and the second-type subcarrier, the sequence number of the padding subcarrier may be a second preset sequence number, for example, "#". In this case, it may be specified that the sequence number of the second-type subcarrier is input into a preset location of the interleaving matrix, and remaining sequence numbers of subcarriers that are in the first frequency-domain resource and that need to be input into the interleaving matrix are sequentially input, according to the first order, into locations other than the location occupied by the padding subcarrier in rows of the interleaving matrix. For example, it may be specified that some rows (or columns) fixed in the interleaving matrix are sequentially input into the interleaving matrix from a first column (or a first row), or it may be specified that some rows (or columns) fixed in the interleaving matrix are sequentially input into the interleaving matrix from a last column (or a last row). A specific location of the sequence number of the padding subcarrier in the interleaving matrix is not limited in this embodiment of this application.

It should be noted that, in the foregoing example, the first frequency-domain resource is 20 MHz, that is, a mapping granularity (interleaving granularity) of the RU is 242 subcarriers. It should be understood that a size of the mapping granularity may be determined based on a maximum bandwidth supported by the device, that is, a quantity of subcarriers that are in the first frequency-domain resource and that are input into the interleaving matrix is determined based on the maximum bandwidth supported by the device. For example, if the bandwidth supported by the device is greater than a PPDU bandwidth, various mapping granularities, such as 20 MHz, 40 MHz, and 80 MHz, may be supported in the PPDU bandwidth. If the bandwidth supported by the device is less than a PPDU bandwidth, the PPDU bandwidth needs to be ensured within the bandwidth supported by the device. For example, if the bandwidth supported by the device is 80 MHz, and a VRU allocated to the device is a 996-tone RU, scheduling cannot be performed in a mapping range of 160 MHz. In other words, if a VRU of 80 MHz is mapped to 160 MHz, an allocated resource cannot be scheduled.

In the foregoing mapping manner 1, that is, after the sequence numbers of the plurality of subcarriers included in the first frequency-domain resource are input into the rows of the interleaving matrix according to the first order, sequence numbers of the plurality of subcarriers participating in mapping in the interleaving matrix are directly output in a column direction, and subcarriers in some RUs may not be more discrete. For example, in FIG. 17, after the 106-tone RU is mapped, there are still two contiguous adjacent subcarriers.

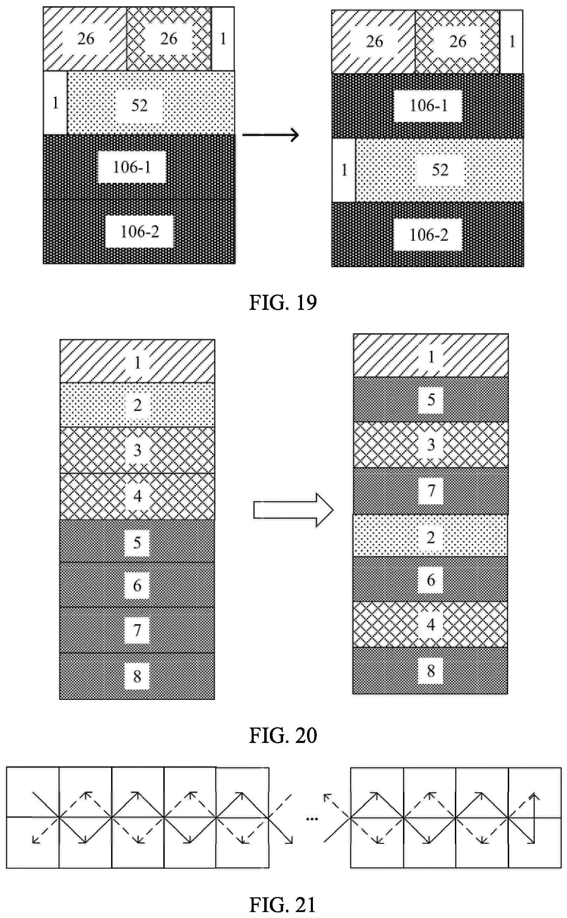

Therefore, in some embodiments, before the sequence numbers of the plurality of subcarriers participating in mapping of the interleaving matrix are output in the column direction, a row change operation may be performed on the rows of the interleaving matrix. For example, a shift operation performed on some rows in the interleaving matrix is essentially changing a row index sequence of the interleaving matrix. The example in FIG. 17 is still used. For example, a row index sequence {1, 2, 3, 4} of the interleaving matrix in FIG. 17 may be changed to {1, 3, 2, 4}, as shown in FIG. 19. It can be learned from FIG. 19 that, compared with a left diagram in FIG. 19, subcarriers included in the 106-tone RU are more discrete in a right diagram in FIG. 19. In other words, any two adjacent subcarriers included in the first PRU are noncontiguous in frequency domain. It should be understood that, that the any two adjacent subcarriers included in the first PRU are noncontiguous in frequency domain means that every two subcarriers are noncontiguous. The subcarriers included in the PRU herein include the first-type subcarrier and the second-type subcarrier.

In the foregoing embodiment, a discrete design is performed by using a single subcarrier as a granularity, that is, every two subcarriers are noncontiguous. In another implementation, a discrete granularity may also be a subcarrier group. One subcarrier group includes two or more subcarriers, every two subcarrier groups are noncontiguous, and subcarriers in the subcarrier group are contiguous.

In an example, a matrix may be constructed according to an original row index sequence of the interleaving matrix. An element in the matrix is each original row index. Operations are performed on the matrix for a plurality of times, to change the original row index sequence to a target row index sequence. The following provides two possible change manners.

Change manner 1: A first matrix is constructed according to the original row index sequence of the interleaving matrix, where a row quantity of the first matrix is 1, and a column quantity of the first matrix is greater than or equal to a row index quantity of the interleaving matrix. For example, the row index quantity of the interleaving matrix is N. If N is an odd number, the column quantity of the first matrix may be N+1. If N is an even number, the column quantity of the first matrix may be N. For example, if N=8, the row quantity of the first matrix is 1, the column quantity of the first matrix is 8, and an element in the first matrix is a row index. That is, the first matrix may be:

| 1 | 2 | 3 | 4 | 5 | 6 | 7 | 8 |
|---|---|---|---|---|---|---|---|

Transformation operations are performed on the first matrix for a plurality of times until the first matrix becomes a target matrix with N rows and one column. In this case, row indexes in the target matrix are output in a row-first-column-later order, to obtain the target row index sequence.

For example, each transformation operation is performed to first divide, by column, a matrix obtained in a previous change into a first submatrix and a second submatrix, and then to move the second submatrix to a row added to the first submatrix, to form a new matrix. Then,

| 1 | 2 | 3 | 4 | 5 | 6 | 7 | 8 |
|---|---|---|---|---|---|---|---|

After row change for the first time, the first matrix may be changed to:

| 1 | 2 | 3 | 4 |
|---|---|---|---|
| 5 | 6 | 7 | 8 |

After row change for the second time, the first matrix may be changed to:

| 1 | 2 |
|---|---|
| 5 | 6 |
| 3 | 4 |
| 7 | 8 |

After row change for the third time, the first matrix may be changed to:

| 1 |
|---|
| 5 |
| 3 |
| 7 |
| 2 |
| 6 |
| 4 |
| 8 |

Based on the change manner 1, the original row index sequence changes from {1, 2, 3, 4, 5, 6, 7, 8} to the target row index sequence {1, 5, 3, 7, 2, 6, 4, 8}. That is, when row-column transformation is performed by using the interleaving matrix, when output is performed by column, the output may not be performed according to an order of the original row index sequence, but may be performed according to an order of the target row index sequence. For example, when the sequence numbers of the plurality of subcarriers participating in mapping of the interleaving matrix are output according to the column direction, a first row of a first column is output first, then a fifth row of the first column is output, and then a third row of the first column is output, ..., until all rows of the first column are output, and then sequence numbers of a second column are output until a sequence number of an eighth row of a last column is output.

In this manner, the subcarriers may be more discrete, as shown in FIG. 20. FIG. 20 shows a correspondence between the original row index sequence and the target row index sequence. In FIG. 20, a row quantity of the interleaving matrix is 8. When the first frequency-domain resource is mapped, the sequence numbers of the plurality of subcarriers included in the first frequency-domain resource are sequentially input into the interleaving matrix according to the first order, to obtain a left diagram shown in FIG. 19. Before the sequence numbers of the subcarriers in the interleaving matrix are output in a column direction, a left diagram in FIG. 20 is changed by row, to obtain a right diagram in FIG. 20. Then, the sequence numbers of the subcarriers in the interleaving matrix are output in the column direction. It can be learned from FIG. 19 that, before the sequence numbers of the subcarriers in the interleaving matrix are output, a row transformation operation is performed on the interleaving matrix, so that the subcarriers can be more discrete.

It should be understood that N=8 (an even number) is used as an example in the foregoing. When N is an odd number, an element in an $(N+1)^{th}$ column may be a predefined sequence number, for example, *.

Similarly, if N=16, an original sequence number sequence is {1, 2, 3, 4, 5, 6, 7, 8, 9, 10, 11, 12, 13, 14, 15, 16}, and a target row index sequence {1, 9, 5, 13, 3, 11. 7, 15, 2, 10, 6, 14, 4, 12, 8, 16} is obtained in the first change manner.

It should be noted that FIG. 20 shows the change of the row index, but it does not mean that the interleaving matrix has only one column, that is, each row in FIG. 20 corresponds to a plurality of columns of the interleaving matrix. In this manner, the example in Table 2 is still used. When the sequence numbers of the plurality of subcarriers participating in mapping of the interleaving matrix are output according to the column direction, a first row of a first column is output first, then a fifth row of the first column is output, and then a third row of the first column is output, ..., until all rows of the first column are output, and then sequence numbers of a second column are output until a sequence number of an eighth row of a last column is output.

For example, the example in Table 2 is still used, that is, sequence numbers of 242 subcarriers corresponding to first 20 MHz in 80 MHz are -500 to -259, and sequence numbers of 18 pilot subcarriers in the first 20 MHz in 80 MHz are not input into the interleaving matrix. Therefore, before the sequence numbers in Table 2 are output, row index transformation may be performed on the Table 2, to obtain Table 4. It should be understood that all blank parts in the table are corresponding to subcarrier sequence numbers. For brevity, Table 4 shows only some subcarrier sequence numbers.

**Table 4**

| | | | | | | | | | | | | | | | | | | | | | | | | | |
|---|---|---|---|---|---|---|---|---|---|---|---|---|---|---|---|---|---|---|---|---|---|---|---|---|---|
| −500 | −499 | −498 | −497 | −496 | **−495** | **−493** | −492 | −491 | | | | | | | | | | | | | | | | | −471 |
| −379 | | | | | | | | | | | | | | | | | | | | | | | | | −350 |
| −439 | | | | | | | | | | | | | | | | | | | | | | | | | −410 |
| −318 | | | | | | | | | | | | | | | | | | | | | | | | | −289 |
| −470 | −469 | −467 | | | | | | | | | | | | | | | | | | | | | | | −441 |
| −349 | | | | | | | | | | | | | | | | | | | | | | | | | −319 |
| −409 | | | | | | | | | | | | | | | | | | | | | | | | | −380 |
| −288 | | | | | | | | | | | | | | | | | | | | | | | | −260 | −259 |

Sequence numbers of rows are sequentially output in a column output direction, to obtain subcarrier sequence numbers after mapping. That is, a subcarrier sequence number set {-500, -499, ..., -259} of the VRU is in a one-to-one correspondence with elements in the following sequences: {-500, -379, -439, -318, -470, -349, -409, - 288, ..., -380, -259}.

For another example, the example in Table 3 is still used, that is, sequence numbers of 242 subcarriers corresponding to first 20 MHz in 80 MHz are -500 to -259, and sequence numbers of 18 pilot subcarriers in the first 20 MHz in 80 MHz are input into the interleaving matrix. Therefore, before the sequence numbers in Table 3 are output, row index transformation may be performed on the Table 3, to obtain Table 5. Gray parts in Table 5 are sequence numbers of pilot subcarriers. It should be understood that all blank parts in the table are corresponding to subcarrier sequence numbers. For brevity, Table 5 shows only some subcarrier sequence numbers.

**Table 5**

| | | | | | | | | | | | | | | | | | | | | | | | | | |
|---|---|---|---|---|---|---|---|---|---|---|---|---|---|---|---|---|---|---|---|---|---|---|---|---|---|
| −500 | | | | | | | | | | | | | | | | | | | | | | | | | −469 |
| −372 | | | | | | | | | | | | | | | | | | | | | | | | | −341 |
| −436 | | | | | | | | | | | | | | | | | | | | | | | | | −405 |
| −308 | | | | | | | | | | | | | | | | | | | | | | | | | −277 |
| −468 | | | | | | | | | | | | | | | | | | | | | | | | | −437 |
| −340 | | | | | | | | | | | | | | | | | | | | | | | | | −309 |
| −404 | | | | | | | | | | | | | | | | | | | | | | | | | −373 |
| −276 | | | | | | | | | | | | | | | | | | | | | | | | | −245 |

Sequence numbers of rows are sequentially output in a column output direction, to obtain subcarrier sequence numbers after mapping. That is, a subcarrier sequence number set {-500, -499, ..., -259} of the VRU is in a one-to-one correspondence with elements in the following sequences: {-500, -436, -308, -340, -404, -276, ..., -373, - 245}.

Change manner 2: A second matrix is constructed according to the original row index sequence of the interleaving matrix, where a row quantity of the second matrix is greater than or equal to 2, and row indexes in the original row index sequence in the second matrix are in ascending order starting from a first row and a first column, and row indexes corresponding to rows may be alternately output from the first column of the second matrix in ascending order of columns until a last column, and then in descending order of columns, to obtain the target row index sequence.

For example, a row quantity of the second matrix is 2. If the original row index sequence is {1, 2, ..., N}, row indexes in the original row index sequence may be sequentially input into the second matrix in a row-first-column-later order. If N is an odd number, a last row index may be represented by *. When a transformation operation is performed on the original row index sequence, row indexes corresponding to rows may be alternately output from a first column of the second matrix in ascending order of columns, and then in descending order of columns, to obtain the target row index sequence.

For example, FIG. 21 shows an example of outputting a row index sequence. A solid line in FIG. 21 indicates that row indexes corresponding to a first row and a second row are alternately output in ascending order of columns, and a dashed line in FIG. 21 indicates that row indexes corresponding to the first row and the second row are alternately output in descending order of columns.

For example, if N=8, a row quantity of the second matrix is 2, a column quantity is 4, and the original row index sequence is { 1, 2, 3, 4, 5, 6, 7, 8}, that is, the first matrix may be:

| 1 | 2 | 3 | 4 |
|---|---|---|---|
| 5 | 6 | 7 | 8 |

According to the mapping manner of the row index sequence in FIG. 21, a target row index sequence { 1, 6, 3, 8, 4, 7, 2, 5} is output.

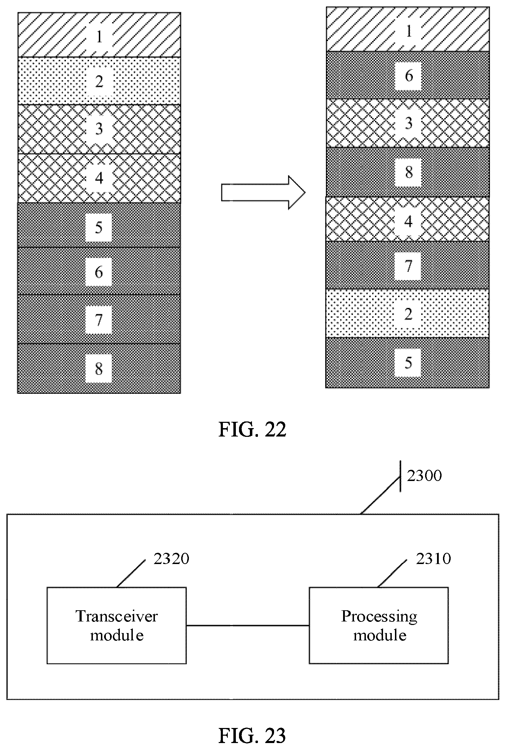

In this manner, the subcarriers may also be more discrete, as shown in FIG. 22. FIG. 22 shows a correspondence between the original row index sequence and the target row index sequence. In FIG. 22, a row quantity of the interleaving matrix is 8. When the first frequency-domain resource is mapped, the sequence numbers of the plurality of subcarriers included in the first frequency-domain resource are sequentially input into the interleaving matrix according to the first order, to obtain a left diagram shown in FIG. 22. Before sequence numbers of the subcarriers in the interleaving matrix are output in a column direction, a left diagram in FIG. 22 is changed by row, to obtain a right diagram in FIG. 22. Then, the sequence numbers of the subcarriers in the interleaving matrix are output in the column direction. It can be learned from FIG. 22 that, before the sequence numbers of the subcarriers in the interleaving matrix are output, a row transformation operation is performed on the interleaving matrix, so that the subcarriers can be more discrete.

Similarly, if N=16, an original sequence number sequence is {1, 2, 3, 4, 5, 6, 7, 8, 9, 10, 11, 12, 13, 14, 15, 16}, and a target row index sequence { 1, 10, 3, 12, 5, 14. 7, 16, 8, 15, 6, 13, 4, 11, 2, 9} is obtained in the second change manner.

For example, the example in Table 2 is still used, that is, sequence numbers of 242 subcarriers corresponding to first 20 MHz in 80 MHz are -500 to -259, and sequence numbers of 18 pilot subcarriers in the first 20 MHz in 80 MHz are not input into the interleaving matrix. Therefore, before the sequence numbers in Table 2 are output, row index transformation may be performed on the Table 2, to obtain Table 6. It should be understood that all blank parts in the table are corresponding to subcarrier sequence numbers. For brevity, Table 6 shows only some subcarrier sequence numbers.

**Table 6**

| −500 | −499 | −498 | −497 | −496 | **−495** | **−493** | −492 | −491 | | | | | | | | | | | | | | | | | −471 |
|---|---|---|---|---|---|---|---|---|---|---|---|---|---|---|---|---|---|---|---|---|---|---|---|---|---|
| −349 | | | | | | | | | | | | | | | | | | | | | | | | | −319 |

| −439 | | | | | | | | | | | | | | | | | | | | | | | | | −410 |
|---|---|---|---|---|---|---|---|---|---|---|---|---|---|---|---|---|---|---|---|---|---|---|---|---|---|
| −288 | | | | | | | | | | | | | | | | | | | | | | | | −260 | −259 |
| −409 | | | | | | | | | | | | | | | | | | | | | | | | | −380 |
| −318 | | | | | | | | | | | | | | | | | | | | | | | | | −289 |
| −470 | −469 | −467 | | | | | | | | | | | | | | | | | | | | | | | −441 |
| −379 | | | | | | | | | | | | | | | | | | | | | | | | | −350 |

Sequence numbers of rows are sequentially output in a column output direction, to obtain subcarrier sequence numbers after mapping. That is, a subcarrier sequence number set {-500, -499, ..., -259} of the VRU is in a one-to-one correspondence with elements in the following sequences: {-500, -349, -439, -288, -409, -318, -470, - 379, ..., -441, -350}.

For another example, the example in Table 3 is still used, that is, sequence numbers of 242 subcarriers corresponding to first 20 MHz in 80 MHz are -500 to -259, and sequence numbers of 18 pilot subcarriers in the first 20 MHz in 80 MHz are input into the interleaving matrix. Therefore, before the sequence numbers in Table 3 are output, row index transformation may be performed on the Table 3, to obtain Table 7. Gray parts in Table 7 are sequence numbers of pilot subcarriers. It should be understood that all blank parts in the table are corresponding to subcarrier sequence numbers. For brevity, Table 7 shows only some subcarrier sequence numbers.

**Table 7**

| −500 | | | | | | | | | | | | | | | | | | | | | | | | | −469 |
|---|---|---|---|---|---|---|---|---|---|---|---|---|---|---|---|---|---|---|---|---|---|---|---|---|---|
| −340 | | | | | | | | | | | | | | | | | | | | | | | | | −309 |
| −436 | | | | | | | | | | | | | | | | | | | | | | | | | −405 |
| −276 | | | | | | | | | | | | | | | | | | | | | | | | | −245 |
| −404 | | | | | | | | | | | | | | | | | | | | | | | | | −373 |
| −308 | | | | | | | | | | | | | | | | | | | | | | | | | −277 |
| −468 | | | | | | | | | | | | | | | | | | | | | | | | | −437 |
| −372 | | | | | | | | | | | | | | | | | | | | | | | | | −341 |

Sequence numbers of rows are sequentially output in a column output direction, to obtain subcarrier sequence numbers after mapping. That is, a subcarrier sequence number set {-500, -499, ..., -259} of the VRU is in a one-to-one correspondence with elements in the following sequences: {-500, -340, -436, -276, -404, -308, -468, - 372, ..., -437, -341}.

It should be noted that the foregoing two transformation methods of the row index may be applied to any size of row transformation of the interleaving matrix from the VRU to the PRU. For example, an interleaving matrix with a fixed row quantity, for example, 4 rows, 8 rows, or 16 rows, may also be an interleaving matrix with a fixed column quantity. Because a minimum RU is an RU of 26 subcarriers, a column quantity of the interleaving matrix may be 26 (without considering the subcarrier, the column quantity may even be 24), and a row quantity may be determined based on a total input size, and then discreteness is performed through row transformation. In conclusion, an example of eight rows in this embodiment is merely an example, and may be actually an interleaver with a fixed row quantity, an interleaver with a fixed column quantity, an interleaver with a variable row and column quantity, or the like.

Mapping manner 2: The mapping relationship between the VRU and the PRU is a mapping relationship table between a sequence number of each subcarrier included in the VRU and a sequence number of each subcarrier included in the PRU. That is, the AP may map a first frequency-domain resource based on the mapping relationship table. For example, a subcarrier 1 in the VRU corresponds to a subcarrier 5 in the PRU, and a subcarrier 2 in the VRU corresponds to a subcarrier 8 in the PRU. In this mapping manner, the STA can determine a location of each subcarrier in the PRU in a corresponding first frequency-domain resource only by searching the mapping relationship table, which is simple.

For example, the mapping relationship table may be the foregoing Table 2 to Table 7. In a broad sense, the mapping relationship table may be considered as sequence number sequences obtained through outputting by column in Table 2 to Table 7.

It should be noted that a specific implementation form of the mapping relationship between the VRU and the PRU is not limited in this embodiment of this application. For example, the mapping relationship may be the foregoing interleaving matrix (also considered as a mapping matrix), or may be the foregoing mapping relationship table. In some embodiments, the mapping relationship between the VRU and the PRU may also be a mapping formula, for example,

$$i = N_{\text{ROW}} \cdot (k \bmod N_{\text{COL}}) + \left\lfloor \frac{k}{N_{\text{COL}}} \right\rfloor , \text{ where}$$

$N_{\text{ROW}}$ is a row quantity of the matrix, $N_{\text{COL}}$ is a column quantity of the matrix, k is a sequence number of a subcarrier that is input into the matrix, and i is a sequence number obtained by interleaving a subcarrier whose sequence number is k by using the matrix.

An embodiment of this application further provides a resource mapping method. The resource mapping method may be implemented by a communication apparatus, for example, an interleaver or a chip disposed in the interleaver.

In an example, the interleaver may be configured to map a sequence number of a subcarrier of the first VRU to a sequence number of a subcarrier of the first PRU based on the interleaving matrix. For example, a sequence number i of a subcarrier of the first PRU mapped from a subcarrier with a sequence number k of the first VRU based on the interleaver satisfies the following formula: $i = N_{\text{ROW}} \cdot (k \bmod N_{\text{COL}}) + \left\lfloor \frac{k}{N_{\text{COL}}} \right\rfloor$. $N_{\text{ROW}}$ is a row quantity of the interleaver, $N_{\text{COL}}$

is a column quantity of the interleaver, k is a sequence number of a subcarrier that is input into the interleaver, and i is a sequence number obtained by interleaving a subcarrier whose sequence number is k by using the interleaver. For specific implementation of the interleaver, refer to the implementation of the interleaving matrix in the foregoing method embodiment. Details are not described herein again. In addition, for a specific implementation in which the interleaver maps the VRU to the PRU, refer to related content in the mapping manner 1 and the mapping manner 2. Details are not described herein again.

It should be noted that an interleaving level of the interleaver is not limited in this embodiment of this application. For example, directly outputting the sequence numbers of the plurality of subcarriers in a row-in-column-out manner may be considered as first-level interleaving, and outputting the sequence numbers of the plurality of subcarriers in a row-in-column-out manner as shown in the foregoing change manner 1 or change manner 2 may be considered as second-level interleaving.

The resource allocation method provided in this embodiment of this application is essentially a mapping manner from a VRU to a PRU. In the mapping manner, a contiguous VRU may be mapped to a discrete PRU. Based on this mapping manner, a transmit end may notify a receive end that an RU allocated to the receive end is a VRU, but the transmit end sends data on the discrete PRU to which the contiguous VRU is mapped. Because the contiguous VRU is mapped to the discrete PRU, it is equivalent to reducing a quantity of subcarriers in each MHz, so that the transmit end can support higher transmit power. In addition, the transmit end may use a resource allocation manner in which a bandwidth is divided into several resource units, and there is no need to define a plurality of distributed RUs or care about how to select and allocate the distributed RU, so that maximum transmit power of a device can be increased.

In the foregoing embodiments provided in this application, the methods provided in embodiments of this application are separately described from a perspective of interaction between the first device and the second device. To implement functions in the foregoing methods provided in embodiments of this application, the first device and the second device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, a communication apparatus for implementing the foregoing method in embodiments of this application. Therefore, all the foregoing content may be used in the following embodiments. Repeated content is not described again.

FIG. 23 is a schematic block diagram of a communication apparatus 2300 according to an embodiment of this application. The communication apparatus 2300 may correspondingly implement functions or steps implemented by the first device or the second device in the foregoing method embodiments. The communication apparatus may include a processing module 2310 and a transceiver module 2320. Optionally, the communication apparatus may further include a storage unit. The storage unit may be configured to store instructions (code or a program) and/or data. The processing module 2310 and the transceiver module 2320 may be coupled to the storage unit. For example, the processing module 2310 may read the instructions (code or program) and/or data in the storage unit, to implement a corresponding method. The foregoing units may be independently disposed, or may be partially or completely integrated.

In some possible implementations, the communication apparatus 2300 can correspondingly implement behavior and functions of the first device in the method embodiment. For example, the communication apparatus 2300 may be an AP, or may be a component (for example, a chip or a circuit) used in the AP. The transceiver module 2320 may be configured to perform all receiving or sending operations performed by the first device in the embodiment shown in FIG 9, for example, S901 and S903 in the embodiment shown in FIG. 9, and/or another process used to support the technology described in this specification. The processing module 2310 is configured to perform all operations other than the receiving or sending operations performed by the first device in the embodiment shown in FIG. 9, for example, S902 in the embodiment shown in FIG. 9, and/or another process used to support the technology described in this specification.

For example, the transceiver module 2320 is configured to send resource allocation information to a second device, where the resource allocation information indicates a first virtual resource unit VRU, and the first VRU includes a plurality of contiguous subcarriers in frequency domain; the processing module 2310 is configured to map the first VRU to a first physical resource unit PRU based on a mapping relationship between a VRU and a PRU, where a plurality of subcarriers included in the first PRU are noncontiguous in frequency domain; and the transceiver module 2320 is further configured to transmit data on the first PRU.

In some possible implementations, the communication apparatus 2300 can correspondingly implement behavior and functions of the second device in the method embodiment. For example, the communication apparatus 2300 may be a STA or an AP, or may be a component (for example, a chip or a circuit) used in the STA or the AP. The transceiver module 2320 may be configured to perform all receiving or sending operations performed by the second device in the embodiment shown in FIG 9, for example, S901 and S903 in the embodiment shown in FIG. 9, and/or another process used to support the technology described in this specification. The processing module 2310 is configured to perform operations other than the receiving or sending operation performed by the second device in the embodiment shown in FIG. 9, for example, S902 in the embodiment shown in FIG. 9, and/or another process used to support the technology described in this specification.

For example, the transceiver module 2320 is configured to receive resource allocation information from a first device, where the resource allocation information indicates a first VRU, and the first VRU includes a plurality of contiguous subcarriers in frequency domain; the processing module 2310 is configured to determine, based on a mapping relationship between a VRU and a physical resource unit PRU, a first PRU corresponding to the first VRU, where a plurality of subcarriers included in the first PRU are noncontiguous in frequency domain; and the transceiver module 2320 is configured to receive data from the first device on the first PRU.

In some possible implementations, the communication apparatus 2300 can correspondingly implement behavior and functions of the interleaver in the method embodiment. For example, the communication apparatus 2300 may be an interleaver, or may be a component (for example, a chip or a circuit) used in the interleaver. The transceiver module 2320 may be configured to perform all receiving or sending operations performed by the interleaver in this embodiment of this application. The processing module 2310 is configured to perform all operations other than the receiving or sending operations performed by the interleaver in this embodiment of this application.

For example, the processing module 2310 is configured to map a sequence number of a subcarrier of a first VRU to a sequence number of a subcarrier of a first PRU based on an interleaving matrix, where the first VRU includes a plurality of contiguous subcarriers in frequency domain, and a plurality of subcarriers included in the first PRU are noncontiguous in frequency domain; and the transceiver module 2320 is configured to output the sequence number of the subcarrier of the first PRU.

In a possible implementation of the communication apparatus 2300, a sequence number i of a subcarrier of the first PRU mapped from a subcarrier with a sequence number k of the first VRU based on the interleaving matrix satisfies the following formula:

$$ i = N_{\text{ROW}} \cdot (k \bmod N_{\text{COL}}) + \left\lfloor \frac{k}{N_{\text{COL}}} \right\rfloor, $$

where

$N_{\text{ROW}}$ is a row quantity of the interleaving matrix, $N_{\text{COL}}$ is a column quantity of the interleaving matrix, k is a sequence number of a subcarrier that is input into the interleaving matrix, and i is a sequence number obtained by interleaving a subcarrier whose sequence number is k by using the interleaving matrix.

In a possible implementation of the communication apparatus 2300, any adjacent subcarriers included in the first PRU are noncontiguous in frequency domain.

Before a sequence number of each subcarrier included in the interleaving matrix is output, an original row index sequence of the interleaving matrix is changed to a target row index sequence; and

the original row index sequence is {1, 2, 3, 4, 5, 6, 7, 8}, and the target row index sequence is {1, 5, 3, 7, 2, 6, 4, 8} or {1, 6, 3, 8, 4, 7, 2, 5}; or
the original row index sequence is {1, 2, 3, 4, 5, 6, 7, 8, 9, 10, 11, 12, 13, 14, 15, 16}, and the target row index sequence is { 1, 9, 5, 13, 3, 11, 7, 15, 2, 10, 6, 14, 4, 12, 8, 16}, or {1, 10, 3, 12, 5, 14, 7, 16, 8, 15, 6, 13, 4, 11, 2, 9}.

That the communication apparatus 2300 maps the first VRU to the first PRU includes:
sequentially inputting, into rows of the interleaving matrix according to a first order, sequence numbers of a plurality of subcarriers included in a first frequency-domain resource in which the first VRU is located, and outputting sequence numbers of the subcarriers in the interleaving matrix according to a column direction of the interleaving matrix, where the first order is an ascending order, or the first order is a descending order.

In a possible implementation of the communication apparatus 2300, in the plurality of subcarriers included in the first frequency-domain resource, subcarriers that are input into the interleaving matrix are first-type subcarriers, or subcarriers that are input into the interleaving matrix are first-type subcarriers and a second-type subcarrier, the first-type subcarrier is used to carry data, and the second-type subcarrier includes one or more of a null subcarrier, a direct current subcarrier, a guard subcarrier, and a pilot subcarrier; and

sequence numbers of the subcarriers that are input into the interleaving matrix are sequence numbers of the first-type subcarriers in the plurality of subcarriers included in the first frequency-domain resource;
sequence numbers of the subcarriers that are input into the interleaving matrix are the sequence numbers of the plurality of subcarriers included in the first frequency-domain resource, each sequence number of the second-type subcarrier in the plurality of subcarriers is a first preset sequence number, and the sequence numbers of the subcarriers output from the interleaving matrix do not include the first preset sequence number; or
sequence numbers of the subcarriers that are input into the interleaving matrix are the sequence numbers of the plurality of subcarriers included in the first frequency-domain resource, each sequence number of the second-type subcarrier in the plurality of subcarriers is a first preset sequence number, the first preset sequence number is located at a preset location of the interleaving matrix, and the sequence numbers of the subcarriers output from the interleaving matrix do not include the first preset sequence number.

In a possible implementation of the communication apparatus 2300, the second-type subcarrier is a pilot subcarrier, and the pilot subcarrier is a maximum pilot subcarrier set of a 26-tone RU in the first frequency-domain resource.

In a possible implementation of the communication apparatus 2300, a quantity of the subcarriers that are input into the interleaving matrix and that are in the plurality of subcarriers included in the first frequency-domain resource is less than a quantity of subcarriers that are input into the interleaving matrix and that are supported by the interleaving matrix; and

the sequence numbers of the subcarriers that are input into the interleaving matrix are sequence numbers of subcarriers that are in the first frequency-domain resource and that are to be input into the interleaving matrix and a sequence number of a padding subcarrier, the sequence number of the padding subcarrier is located in a preset location of the interleaving matrix, each sequence number of the padding subcarrier is a second preset sequence number, and the sequence numbers of the subcarriers output from the interleaving matrix do not include the second preset sequence number.

In a possible implementation of the communication apparatus 2300, a quantity of the plurality of subcarriers included in the first frequency-domain resource is determined based on a maximum bandwidth supported by the first device.

In a possible implementation of the communication apparatus 2300, the first VRU is mapped to the first PRU based on a mapping relationship between a sequence number of each subcarrier included in the first VRU and a sequence number of each subcarrier included in the first PRU.

In a possible implementation of the communication apparatus 2300, the sequence numbers of the subcarriers included in the first frequency-domain resource start from 0 or 1;

the sequence numbers of the subcarriers included in the first frequency-domain resource are subcarrier numbers in actual frequency bands corresponding to the subcarriers; or
the sequence numbers of the subcarriers included in the first frequency-domain resource are preset sequence numbers plus a preset offset value.

In a possible implementation of the communication apparatus 2300, the sequence numbers of the subcarriers corresponding to the first VRU are located in a first set, and the sequence numbers of the subcarriers corresponding to the first PRU are located in the first set;

the sequence numbers of the subcarriers corresponding to the first VRU are located in a first set, the sequence numbers of the subcarriers corresponding to the first PRU are located in a second set, and there is no intersection between the first set and the second set, or a part of sequence numbers in the first set are the same as those in the second set are the same; or
the sequence numbers of the subcarriers corresponding to the first VRU are located in a first set, the sequence numbers of the subcarriers corresponding to the first PRU are located in a plurality of second sets, there is no intersection between the plurality of second sets, and there is no intersection between the first set and the plurality of second sets, or there is an intersection between the first set and a part of the plurality of second sets.

It should be understood that in this embodiment of this application, the processing module 2310 may be implemented by a processor or a processor-related circuit component, and the transceiver module 2320 may be implemented by a transceiver, a transceiver-related circuit component, or a communication interface.

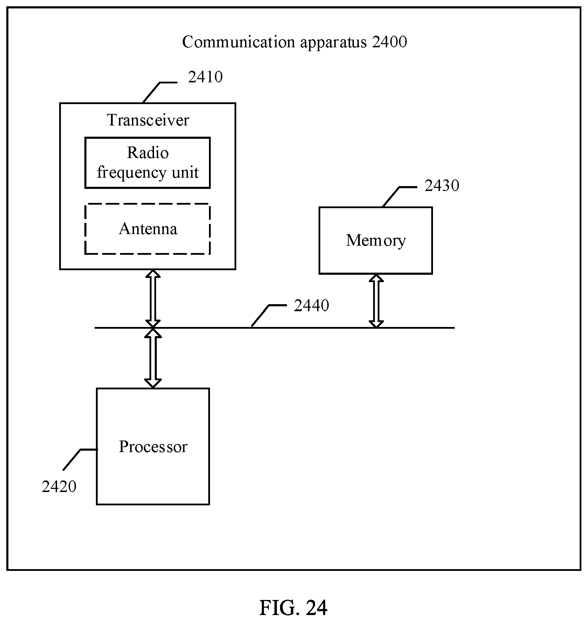

FIG. 24 shows a communication apparatus 2400 according to an embodiment of this application. The communication apparatus 2400 may be an AP, a STA, or an interleaver, and can implement functions of the first device, the second device, or the interleaver in the methods provided in embodiments of this application. Alternatively, the communication apparatus 2400 may be an apparatus that can support the first device to implement a corresponding function in the methods provided in embodiments of this application, an apparatus that can support the second device to implement a corresponding function in the methods provided in embodiments of this application, or an apparatus that can support the interleaver to implement a corresponding function in the methods provided in embodiments of this application. The communication apparatus 2400 may be a chip or a chip system. In this embodiment of this application, the chip system may include a chip, or may include a chip and another discrete component.

In hardware implementation, the transceiver module 2320 may be a transceiver 2410.

The communication apparatus 2400 includes at least one processor 2420, configured to implement or support the communication apparatus 2400 to implement functions of the first device or the second device in the methods provided in embodiments of this application, for example, generating the foregoing PPDU. The communication apparatus 2400 may further include at least one memory 2430, configured to store program instructions and/or data. The memory 2430 is coupled to the processor 2420. The coupling in this embodiment of this application may be an indirect coupling or a communication connection between apparatuses, units, or modules in an electrical form, a mechanical form, or another form, and is used for information exchange between the apparatuses, the units, or the modules. The processor 2420 may collaborate with the memory 2430. The processor 2420 may execute the program instructions and/or the data stored in the memory 2430, to enable the communication apparatus 2400 to implement a corresponding method. At least one of the at least one memory may be located in the processor.

The communication apparatus 2400 may further include the transceiver 2410, configured to communicate with another device by using a transmission medium, so that an apparatus in the communication apparatus 2400 may communicate with the another device. For example, when the communication apparatus is a terminal, the another device is a network device. Alternatively, when the communication apparatus is a network device, the another device is a terminal. The processor 2420 may send and receive data by using the transceiver 2410. The transceiver 2410 may be specifically a transceiver. The communication apparatus 2400 may further include a radio frequency unit. The radio frequency unit may be independent of the communication apparatus 2400, or may be integrated into the communication apparatus 2400. Certainly, the transceiver 2410 may further include an antenna, for example, a remote antenna independent of the communication apparatus 2400, or an antenna integrated into the communication apparatus 2400.

A specific connection medium between the transceiver 2410, the processor 2420, and the memory 2430 is not limited in this embodiment of this application. In this embodiment of this application, the memory 2430, the processor 2420, and the transceiver 2410 are connected through a bus 2440 in FIG. 24. The bus is represented by using a thick line in FIG. 24. A manner of connection between other components is merely an example for description, and imposes no limitation. The bus may be classified into an address bus, a data bus, a control bus, and the like. For ease of expression, the bus is indicated by only a bold line in FIG. 24, which does not mean that only one bus or one type of bus exists.

In embodiments of this application, the processor 2420 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory 2430 may be a nonvolatile memory, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be noted that the communication apparatus in the foregoing embodiments may be a terminal, a circuit, a chip used in the terminal, or another combined component, component, or the like that has a function of the terminal. When the communication apparatus is the terminal, the transceiver module may be a transceiver, and may include an antenna, a radio frequency circuit, and the like. The processing module may be a processor, for example, a central processing module (central processing unit, CPU). When the communication apparatus is a component having a function of the terminal, the transceiver module may be a radio frequency unit, and the processing module may be a processor. When the communication apparatus is the chip or a chip system, the transceiver module may be an input/output interface of the chip or the chip system, and the processing module may be a processor of the chip or the chip system.

As a possible product form, the AP or the STA described in this embodiment of this application may further be implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

The first device in embodiments of this application may be an AP or a STA. The second device may be an AP or a STA. It should be understood that the APs in various product forms have any function of the AP in the foregoing method embodiments. Details are not described herein again. The STAs in various forms have any function of the STA in the foregoing method embodiments. Details are not described herein again.

An embodiment of this application further provides a communication system. Specifically, the communication system includes a second device and a first device, or may further include more first devices and second devices. For example, the communication system includes a second device and a first device that are configured to implement related functions in FIG. 9.

The first device is configured to implement functions related to the first device in FIG 9. The second device is configured to implement functions related to the second device in FIG 9. For example, the second device may perform S902 and S903 in the embodiment shown in FIG. 9, and the first device may perform S901 and S902 in the embodiment shown in FIG. 9.

An embodiment of this application further provides a computer-readable storage medium, including instructions. When the instructions are run on a computer, the computer is enabled to perform the method performed by the first device or the second device in FIG. 9.

An embodiment of this application further provides a computer program product, including computer program code. When the computer program code is run on a computer, the computer is enabled to perform the method performed by the first device or the second device in FIG. 9.

An embodiment of this application provides a chip system. The chip system includes a processor, may further include a memory, and is configured to implement the function of the first device or the second device in the foregoing methods. The chip system may include a chip, or may include a chip and another discrete component.

An embodiment of this application further provides a communication apparatus, including a processor and an interface. The processor is configured to perform the resource allocation method or the resource mapping method in any one of the foregoing method embodiments.

It should be understood that the communication apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

It should be understood that the terms "system" and "network" may be used interchangeably in embodiments of this application. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first information and second information are merely used to distinguish between different indication information, and do not indicate different priorities, importance, or the like of the two types of information.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the term "for example" in embodiments of this application is used to represent an example or a description. Any embodiment or implementation solution described as an "example" in embodiments of this application should not be explained as being more preferred than another embodiment or implementation solution. That is, using the word "example" is intended to describe a concept in a specific manner.

All or some of the methods in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like. The scope of the present invention is defined by the scope of the appended claims.

**Appendix 1: Data and pilot subcarrier indices for RUs in a 20 MHz EHT PPDU (Data and pilot subcarrier indices for RUs in a 20 MHz EHT PPDU)**

| RU type (type) | RU index and subcarrier sequence number range (RU index and subcarrier range) | | | | |
|---|---|---|---|---|---|
| 26-tone RU | RU 1 [-121: -96] | RU 2 [-95: -70] | RU 3 [-68: -43] | RU 4 [-42: -17] | RU 5 [-16: -4, 4: 16] |
| | RU 6 | RU 7 | RU 8 | RU 9 | |
| RU type (type) | RU index and subcarrier sequence number range (RU index and subcarrier range) | | | | |
| | [17: 42] | [43: 68] | [70: 95] | [96: 121] | |
| 52-tone RU | RU 1 [-121: -70] | RU 2 [-68: -17] | RU 3 [17: 68] | RU 4 [70: 121] | |
| 106-tone RU | RU 1 [-122: -17] | | RU 2 [17: 122] | | |
| 242-tone RU | RU 1 [-122: -2, 2:122] | | | | |

**Appendix 2: Data and pilot subcarrier indices for RUs in a 40 MHz EHT PPDU (Data and pilot subcarrier indices for RUs in a 40 MHz EHT PPDU)**

| RU type (type) | RU index and subcarrier sequence number range (RU index and subcarrier range) | | | | |
|---|---|---|---|---|---|
| 26-tone RU | RU 1 [-243: -218] | RU 2 [-217: -192] | RU 3 [-189: -164] | RU 4 [-163: -138] | RU 5 [-136: -111] |
| | RU 6 [-109: -84] | RU 7 [-83: -58] | RU 8 [-55: -30] | RU 9 [-29: -4] | |
| | RU 10 [4: 29] | RU 11 [30: 55] | RU 12 [58: 83] | RU 13 [84: 109] | RU 14 [111: 136] |
| | RU 15 [138: 163] | RU 16 [164: 189] | RU 17 [192: 217] | RU 18 [218: 243] | |
| 52-tone RU | RU 1 [-243: -192] | RU 2 [-189: -138] | RU 3 [-109: -58] | RU 4 [-55: -4] | |
| | RU 5 [4: 55] | RU 6 [58: 109] | RU 7 [138: 189] | RU 8 [192: 243] | |
| 106-tone RU | RU 1 [-243: -138] | RU 2 [-109: -4] | RU 3 [4: 109] | RU 4 [138: 243] | |
| 242-tone RU | RU 1 [-244: -3] | | RU 2 [3: 244] | | |
| 484-tone RU | RU 1 [-244: -3, 3: 244] | | | | |

**Appendix 3: Data and pilot subcarrier indices for RUs in an 80 MHz EHT PPDU (Data and pilot subcarrier indices for RUs in an 80 MHz EHT PPDU)**

| RU type (type) | RU index and subcarrier sequence number range (RU index and subcarrier range) | | | | |
|---|---|---|---|---|---|
| 26-tone RU | RU 1 [-499: -474] | RU 2 [-473: -448] | RU 3 [-445: -420] | RU 4 [-419: -394] | RU 5 [-392: -367] |
| | RU 6 [-365: -340] | RU 7 [-339: -314] | RU 8 [-311: -286] | RU 9 [-285: -260] | |
| | RU 10 [-252: -227] | RU 11 [-226: -201] | RU 12 [-198: -173] | RU 13 [-172: -147] | RU 14 [-145: -120] |
| | RU 15 [-118: -93] | RU 16 [-92: -67] | RU 17 [-64: -39] | RU 18 [-38: -13] | RU 19 [not defined] |
| | RU 20 [13: 38] | RU 21 [39: 64] | RU 22 [67: 92] | RU 23 [93: 118] | RU 24 [120: 145] |
| | RU 25 [147: 172] | RU 26 [173: 198] | RU 27 [201: 226] | RU 28 [227: 252] | |
| | RU 29 [260: 285] | RU 30 [286: 311] | RU 31 [314: 339] | RU 32 [340: 365] | RU 33 [367: 392] |
| | RU 34 [394: 419] | RU 35 [420: 445] | RU 36 [448: 473] | RU 37 [474: 499] | |
| 52-tone RU | RU 1 [-499: -448] | RU 2 [-445: -394] | RU3 [-365: -314] | RU 4 [-311: -260] | |
| | RU 5 [-252: -201] | RU 6 [-198: -147] | RU 7 [-118: -67] | RU 8 [-64: -13] | |
| | RU 9 [13: 64] | RU 10 [67: 118] | RU 11 [147: 198] | RU 12 [201: 252] | |
| | RU 13 [260: 311] | RU 14 [314: 365] | RU 15 [394: 445] | RU 16 [448: 499] | |
| 106-tone RU | RU 1 [-499: -394] | RU 2 [-365: -260] | RU 3 [-252: -147] | RU 4 [-118: -13] | |
| | RU 5 [13: 118] | RU 6 [147: 252] | RU 7 [260: 365] | RU 8 [394: 499] | |
| 242-tone RU | RU 1 [-500: -259] | RU 2 [-253: -12] | RU 3 [12: 253] | RU 4 [259: 500] | |
| 484-tone RU | RU 1 [-500: -259, -253: -12] | RU 2 [12: 253, 259: 500] | | | |
| 996-tone RU | RU 1 [-500: -3, 3: 500] | | | | |

**Appendix 4: Data and pilot subcarrier indices for RUs in a 160 MHz EHT PPDU (Data and pilot subcarrier indices for RUs in a 160 MHz EHT PPDU)**

| RU type (type) | RU index and subcarrier sequence number range (RU index and subcarrier range) | | | | |
|---|---|---|---|---|---|
| 26-tone RU | RU 1 [-1011: -986] | RU 2 [-985: -960] | RU 3 [-957: -932] | RU 4 [-931: -906] | RU 5 [-904: -879] |
| | RU 6 [-877: -852] | RU 7 [-851: -826] | RU 8 [-823: -798] | RU 9 [-797: -772] | |
| | RU 10 [-764: -739] | RU 11 [-738: -713] | RU 12 [-710: -685] | RU 13 [-684: -659] | RU 14 [-657: -632] |
| | RU 15 [-630: -605] | RU 16 [-604: -579] | RU 17 [-576: -551] | RU 18 [-550: -525] | RU 19 [not defined] |
| | RU 20 [-499: -474] | RU 21 [-473: -448] | RU 22 [-445: -420] | RU 23 [-419: -394] | RU 24 [-392: -367] |
| | RU 25 [-365: -340] | RU 26 [-339: -314] | RU 27 [-311: -286] | RU 28 [-285: -260] | |
| | RU 29 [-252: -227] | RU 30 [-226: -201] | RU 31 [-198: -173] | RU 32 [-172: -147] | RU 33 [-145: -120] |
| | RU 34 [-118: -93] | RU 35 [-92: -67] | RU 36 [-64: -39] | RU 37 [-38: -13] | |
| | RU 38 [13: 38] | RU 39 [39: 64] | RU 40 [67: 92] | RU 41 [93: 118] | RU 42 [120: 145] |
| | RU 43 [147: 172] | RU 44 [173: 198] | RU 45 [201: 226] | RU 46 [227: 252] | |
| | RU 47 [260: 285] | RU 48 [286: 311] | RU 49 [314: 339] | RU 50 [340: 365] | RU 51 [367: 392] |
| | RU 52 [394: 419] | RU 53 [420: 445] | RU 54 [448: 473] | RU 55 [474: 499] | RU 56 [not defined] |
| | RU 57 [525: 550] | RU 58 [551: 576] | RU 59 [579: 604] | RU 60 [605: 630] | RU 61 [632: 657] |
| | RU 62 [659: 684] | RU 63 [685: 710] | RU 64 [713: 738] | RU 65 [739: 764] | |
| | RU 66 [772: 797] | RU 67 [798: 823] | RU 68 [826: 851] | RU 69 [852: 877] | RU 70 [879: 904] |
| | RU 71 [906: 931] | RU 72 [932: 957] | RU 73 [960: 985] | RU 74 [986: 1011] | |

(continued)

| RU type (type) | RU index and subcarrier sequence number range (RU index and subcarrier range) | | | | |
|---|---|---|---|---|---|
| 52-tone RU | RU 1 [-1011: -960] | RU 2 [-957: -906] | RU 3 [-877: -826] | RU 4 [-823: -772] | |
| | RU 5 [-764: -713] | RU 6 [-710: -659] | RU 7 [-630: -579] | RU 8 [-576: -525] | |
| | RU 9 [-499: -448] | RU 10 [-445: -394] | RU 11 [-365: -314] | RU 12 [-311: -260] | |
| | RU 13 [-252: -201] | RU 14 [-198: -147] | RU 15 [-118: -67] | RU 16 [-64: -13] | |
| | RU 17 [13: 64] | RU 18 [67: 118] | RU 19 [147: 198] | RU 20 [201: 252] | |
| | RU 21 [260: 311] | RU 22 [314: 365] | RU 23 [394: 445] | RU 24 [448: 499] | |
| | RU 25 [525: 576] | RU 26 [579: 630] | RU 27 [659: 710] | RU 28 [713: 764] | |
| | RU 29 [772: 823] | RU 30 [826: 877] | RU 31 [906: 957] | RU 32 [960: 1011] | |
| 106-tone RU | RU 1 [-1011: -906] | RU 2 [-877: -772] | RU 3 [-764: -659] | RU 4 [-630: -525] | |
| | RU 5 [-499: -394] | RU 6 [-365: -260] | RU 7 [-252: -147] | RU 8 [-118: -13] | |
| | RU 9 [13: 118] | RU 10 [147: 252] | RU 11 [260: 365] | RU 12 [394: 499] | |
| | RU 13 [525: 630] | RU 14 [659: 764] | RU 15 [772: 877] | RU 16 [906: 1011] | |
| 242-tone RU | RU 1 [-1012: -771] | RU 2 [-765: -524] | RU 3 [-500: -259] | RU 4 [-253: -12] | |
| | RU 5 [12: 253] | RU 6 [259: 500] | RU 7 [524: 765] | RU 8 [771: 1012] | |
| 484-tone RU | RU 1 [-1012: -771, -765: -524] | RU 2 [-500: -259, -253: -12] | RU 3 [12: 253, 259: 500] | RU 4 [524: 765, 771: 1012] | |
| 996-tone RU | RU 1 [-1012: -515, -509: -12] | RU 2 [12: 509, 515: 1012] | | | |
| 2x996-tone RU | RU 1 [-1012: -515, -509: -12, 12: 509, 515: 1012] | | | | |

**Appendix 5: Data and pilot subcarrier indices for RUs in a 320 MHz EHT PPDU (Data and pilot subcarrier indices for RUs in a 320 MHz EHT PPDU)**

| RU type (type) | RU index and subcarrier sequence number range (RU index and subcarrier range) | | | | |
|---|---|---|---|---|---|
| 26-tone RU | RU 1 [-2035: -2010] | RU 2 [-2009: -1984] | RU 3 [-1981: -1956] | RU 4 [-1955: -1930] | RU 5 [-1928: -1903] |
| | RU 6 [-1901: -1876] | RU 7 [-1875: -1850] | RU 8 [-1847: -1822] | RU 9 [-1821: -1796] | |
| | RU 10 [-1788: -1763] | RU 11 [-1762: -1737] | RU 12 [-1734: -1709] | RU 13 [-1708: -1683] | RU 14 [-1681: -1656] |
| | RU 15 [-1654: -1629] | RU 16 [-1628: -1603] | RU 17 [-1600: -1575] | RU 18 [-1574: -1549] | RU 19 [not defined] |
| | RU 20 [-1523: -1498] | RU 21 [-1497: -1472] | RU 22 [-1469: -1444] | RU 23 [-1443: -1418] | RU 24 [-1416: -1391] |
| | RU 25 [-1389: -1364] | RU 26 [-1363: -1338] | RU 27 [-1335: -1310] | RU 28 [-1309: -1284] | |
| | RU 29 [-1276: -1251] | RU 30 [-1250: -1225] | RU 31 [-1222: -1197] | RU 32 [-1196: -1171] | RU 33 [-1169: -1144] |
| | RU 34 [-1142: -1117] | RU 35 [-1116: -1091] | RU 36 [-1088: -1063] | RU 37 [-1062: -1037] | |
| | RU 38 [-1011: -986] | RU 39 [-985: -960] | RU 40 [-957: -932] | RU 41 [-931: -906] | RU 42 [-904: -879] |
| | RU 43 [-877: -852] | RU 44 [-851: -826] | RU 45 [-823: -798] | RU 46 [-797: -772] | |
| | RU 47 [-764: -739] | RU 48 [-738: -713] | RU 49 [-710: -685] | RU 50 [-684: -659] | RU 51 [-657: -632] |
| | RU 52 [-630: -605] | RU 53 [-604: -579] | RU 54 [-576: -551] | RU 55 [-550: -525] | RU 56 [not defined] |
| | RU 57 [-499: -474] | RU 58 [-473: -448] | RU 59 [-445: -420] | RU 60 [-419: -394] | RU 61 [-392: -367] |
| | RU 62 [-365: -340] | RU 63 [-339: -314] | RU 64 [-311: -286] | RU 65 [-285: -260] | |
| | RU 66 [-252: -227] | RU 67 [-226: -201] | RU 68 [-198: -173] | RU 69 [-172: -147] | RU 70 [-145: -120] |
| | RU 71 [-118: -93] | RU 72 [-92: -67] | RU 73 [-64: -39] | RU 74 [-38: -13] | |
| | RU 75 [13: 38] | RU 76 [39: 64] | RU 77 [67: 92] | RU 78 [93: 118] | RU 79 [120: 145] |
| | RU 80 [147: 172] | RU 81 [173: 198] | RU 82 [201: 226] | RU 83 [227: 252] | |
| | RU 84 [260: 285] | RU 85 [286: 311] | RU 86 [314: 339] | RU 87 [340: 365] | RU 88 [367: 392] |
| | RU 89 [394: 419] | RU 90 [420: 445] | RU 91 [448: 473] | RU 92 [474: 499] | RU 93 [not defined] |
| | RU 94 [525: 550] | RU 95 [551: 576] | RU 96 [579: 604] | RU 97 [605: 630] | RU 98 [632: 657] |

| RU type (type) | RU index and subcarrier sequence number range (RU index and subcarrier range) | | | | |
|---|---|---|---|---|---|
| 26-tone RU | RU 99 [659: 684] | RU 100 [685: 710] | RU 101 [713: 738] | RU 102 [739: 764] | |
| | RU 103 [772: 797] | RU 104 [798: 823] | RU 105 [826: 851] | RU 106 [852: 877] | RU 107 [879: 904] |
| | RU 108 [906: 931] | RU 109 [932: 957] | RU 110 [960: 985] | RU 111 [986: 1011] | |
| | RU 112 [1037: 1062] | RU 113 [1063: 1088] | RU 114 [1091: 1116] | RU 115 [1117: 1142] | RU 116 [1144: 1169] |
| | RU 117 [1171: 1196] | RU 118 [1197: 1222] | RU 119 [1225: 1250] | RU 120 [1251: 1276] | |
| | RU 121 [1284: 1309] | RU 122 [1310: 1335] | RU 123 [1338: 1363] | RU 124 [1364: 1389] | RU 125 [1391: 1416] |
| | RU 126 [1418: 1443] | RU 127 [1444: 1469] | RU 128 [1472: 1497] | RU 129 [1498: 1523] | RU 130 [not defined] |
| | RU 131 [1549: 1574] | RU 132 [1575: 1600] | RU 133 [1603: 1628] | RU 134 [1629: 1654] | RU 135 [1656: 1681] |
| | RU 136 [1683: 1708] | RU 137 [1709: 1734] | RU 138 [1737: 1762] | RU 139 [1763: 1788] | |
| | RU 140 [1796: 1821] | RU 141 [1822: 1847] | RU 142 [1850: 1875] | RU 143 [1876: 1901] | RU 144 [1903: 1928] |
| | RU 145 [1930: 1955] | RU 146 [1956: 1981] | RU 147 [1984: 2009] | RU 148 [2010: 2035] | |
| 52-tone RU | RU 1 [-2035: -1984] | RU 2 [-1981: -1930] | RU 3 [-1901: -1850] | RU 4 [-1847: -1796] | |
| | RU 5 [-1788: -1737] | RU 6 [-1734: -1683] | RU 7 [-1654: -1603] | RU 8 [-1600: -1549] | |
| | RU 9 [-1523: -1472] | RU 10 [-1469: -1418] | RU 11 [-1389: -1338] | RU 12 [-1335: -1284] | |
| | RU 13 [-1276: -1225] | RU 14 [-1222: -1171] | RU 15 [-1142: -1091] | RU 16 [-1088: -1037] | |
| | RU 17 [-1011: -960] | RU 18 [-957: -906] | RU 19 [-877: -826] | RU 20 [-823: -772] | |
| | RU 21 [-764: -713] | RU 22 [-710: -659] | RU 23 [-630: -579] | RU 24 [-576: -525] | |
| | RU 25 [-499: -448] | RU 26 [-445: -394] | RU 27 [-365: -314] | RU 28 [-311: -260] | |
| | RU 29 [-252: -201] | RU 30 [-198: -147] | RU 31 [-118: -67] | RU 32 [-64: -13] | |
| | RU 33 [13: 64] | RU 34 [67: 118] | RU 35 [147: 198] | RU 36 [201: 252] | |
| | RU 37 [260: 311] | RU 38 [314: 365] | RU 39 [394: 445] | RU 40 [448: 499] | |

(continued)

| RU type (type) | RU index and subcarrier sequence number range (RU index and subcarrier range) | | | | |
|---|---|---|---|---|---|
| 52-tone RU | RU 41 [525: 576] | RU 42 [579: 630] | RU 43 [659: 710] | RU 44 [713: 764] | |
| | RU 45 [772: 823] | RU 46 [826: 877] | RU 47 [906: 957] | RU 48 [960: 1011] | |
| | RU 49 [1037: 1088] | RU 50 [1091: 1142] | RU 51 [1171: 1222] | RU 52 [1225: 1276] | |
| | RU 53 [1284: 1335] | RU 54 [1338: 1389] | RU 55 [1418: 1469] | RU 56 [1472: 1523] | |
| | RU 57 [1549: 1600] | RU 58 [1603: 1654] | RU 59 [1683: 1734] | RU 60 [1737: 1788] | |
| | RU 61 [1796: 1847] | RU 62 [1850: 1901] | RU 63 [1930: 1981] | RU 64 [1984: 2035] | |
| 106-tone RU | RU 1 [-2035: -1930] | RU 2 [-1901: -1796] | RU 3 [-1788: -1683] | RU 4 [-1654: -1549] | |
| | RU 5 [-1523: -1418] | RU 6 [-1389: -1284] | RU 7 [-1276: -1171] | RU 8 [-1142: -1037] | |
| | RU 9 [-1011: -906] | RU 10 [-877: -772] | RU 11 [-764: -659] | RU 12 [-630: -525] | |
| | RU 13 [-499: -394] | RU 14 [-365: -260] | RU 15 [-252: -147] | RU 16 [-118: -13] | |
| | RU 17 [13: 118] | RU 18 [147: 252] | RU 19 [260: 365] | RU 20 [394: 499] | |
| | RU 21 [525: 630] | RU 22 [659: 764] | RU 23 [772: 877] | RU 24 [906: 1011] | |
| | RU 25 [1037: 1142] | RU 26 [1171: 1276] | RU 27 [1284: 1389] | RU 28 [1418: 1523] | |
| | RU 29 [1549: 1654] | RU 30 [1683: 1788] | RU 31 [1796: 1901] | RU 32 [1930: 2035] | |
| 242-tone RU | RU 1 [-2036: -1795] | RU 2 [-1789: -1548] | RU 3 [-1524: -1283] | RU 4 [-1277: -1036] | |
| | RU 5 [-1012: -771] | RU 6 [-765: -524] | RU 7 [-500: -259] | RU 8 [-253: -12] | |
| | RU 9 [12: 253] | RU 10 [259: 500] | RU 11 [524: 765] | RU 12 [771: 1012] | |
| | RU 13 [1036: 1277] | RU 14 [1283: 1524] | RU 15 [1548: 1789] | RU 16 [1795: 2036] | |
| 484-tone RU | RU 1 [-2036: -1795, -1789: -1548] | RU 2 [-1524: -1283, -1277: -1036] | RU 3 [-1012: -771, -765: -524] | RU 4 [-500: -259, -253: -12] | |
| | RU 5 [12: 253, 259: 500] | RU 6 [524: 765, 771: 1012] | RU 7 [1036: 1277, 1283: 1524] | RU 8 [1548: 1789, 1795: 2036] | |

| RU type (type) | RU index and subcarrier sequence number range (RU index and subcarrier range) | | | | |
|---|---|---|---|---|---|
| 996-tone RU | RU 1 [-2036: -1539, -1533: -1036] | | RU 2 [-1012: -515, -509: -12] | RU 3 [12: 509, 515: 1012] | RU 4 [1036: 1533, 1539: 2036] | |
| 2x996-tone RU | RU 1 [-2036: -1539, -1533: -1036, -1012: -515, -509: -12] | | RU 2 [12: 509, 515: 1012, 1036: 1533, 1539: 2036] | | | |
| 4x996-tone RU | RU 1 [-2036: -1539, -1533: -1036, -1012: -515, -509: -12, 12: 509, 515: 1012, 1036: 1533, 1539: 2036] | | | | | |

**Claims**

1. A resource allocation method, comprising:

sending (S901), by a first device, resource allocation information to a second device, wherein the resource allocation information indicates a first virtual resource unit, VRU, and the first VRU comprises a plurality of contiguous subcarriers in frequency domain; and
mapping (S902), by the first device, the first VRU to a first physical resource unit, PRU, based on a mapping relationship between a VRU and a PRU, and
transmitting (S903) data on the first PRU, wherein a plurality of subcarriers comprised in the first PRU are noncontiguous in frequency domain;
the method being **characterized in that**
the mapping, by the first device, the first VRU to a first PRU comprises:

sequentially inputting, by the first device into rows of an interleaving matrix according to a first order, sequence numbers of a plurality of subcarriers comprised in a first frequency-domain resource in which the first VRU is located, and outputting sequence numbers of the subcarriers in the interleaving matrix according to a column direction of the interleaving matrix, wherein the first order is an ascending order, or the first order is a descending order; and
wherein, before a sequence number of each subcarrier comprised in the interleaving matrix is output, an original row index sequence of the interleaving matrix is changed to a target row index sequence; and
the original row index sequence is {1, 2, 3, 4, 5, 6, 7, 8}, and the target row index sequence is {1, 5, 3, 7, 2, 6, 4, 8} or { 1, 6, 3, 8, 4, 7, 2, 5}; or
the original row index sequence is {1, 2, 3, 4, 5, 6, 7, 8, 9, 10, 11, 12, 13, 14, 15, 16}, and the target row index sequence is {1, 9, 5, 13, 3, 11, 7, 15, 2, 10, 6, 14, 4, 12, 8, 161, or {1, 10, 3, 12, 5, 14, 7, 16, 8, 15, 6, 13, 4, 11, 2, 9}.

2. A resource allocation method, comprising:

receiving (S901), by a second device, resource allocation information from a first device, wherein the resource allocation information indicates a first virtual resource unit, VRU, and the first VRU comprises a plurality of contiguous subcarriers in frequency domain;
determining, by the second device based on a mapping relationship between a VRU and a physical resource unit, PRU, a first PRU corresponding to the first VRU, wherein a plurality of subcarriers comprised in the first PRU are noncontiguous in frequency domain; and
receiving (S903), by the second device, data from the first device on the first PRU;
the method being **characterized in that**
the determining, by the second device based on a mapping relationship between a VRU and a PRU, a first PRU corresponding to the first VRU comprises:

sequentially inputting, by the first device into rows of an interleaving matrix according to a first order, sequence numbers of a plurality of subcarriers comprised in a first frequency-domain resource in which the first VRU is located, and outputting sequence numbers of the subcarriers in the interleaving matrix according to a column direction of the interleaving matrix, wherein the first order is an ascending order, or the first order is a descending order; and
wherein, before a sequence number of each subcarrier comprised in the interleaving matrix is output, an original row index sequence of the interleaving matrix is changed to a target row index sequence; and
the original row index sequence is {1, 2, 3, 4, 5, 6, 7, 8}, and the target row index sequence is {1, 5, 3, 7, 2, 6, 4, 8} or { 1, 6, 3, 8, 4, 7, 2, 5}; or
the original row index sequence is {1, 2, 3, 4, 5, 6, 7, 8, 9, 10, 11, 12, 13, 14, 15, 16}, and the target row index sequence is {1, 9, 5, 13, 3, 11, 7, 15, 2, 10, 6, 14, 4, 12, 8, 16}, or {1, 10, 3, 12, 5, 14, 7, 16, 8, 15, 6, 13, 4, 11, 2, 9}.

3. The method according to claim 1 or 2, wherein a sequence number i of a subcarrier of the first PRU mapped from a subcarrier with a sequence number k of the first VRU based on the interleaving matrix satisfies the following formula:

$$i = N_{ROW} \cdot (k \bmod N_{COL}) + \left\lfloor \frac{k}{N_{COL}} \right\rfloor,$$

wherein

$N_{ROW}$ is a row quantity of the interleaving matrix, $N_{COL}$ is a column quantity of the interleaving matrix, k is a sequence number of a subcarrier that is input into the interleaving matrix, and i is a sequence number obtained by interleaving a subcarrier whose sequence number is k by using the interleaving matrix.

4. The method according to any one of claims 1 to 3, wherein any adjacent subcarriers comprised in the first PRU are noncontiguous in frequency domain.

5. The method according to any one of the preceding claims, wherein in the plurality of subcarriers comprised in the first frequency-domain resource, subcarriers that are input into the interleaving matrix are first-type subcarriers, or subcarriers that are input into the interleaving matrix are first-type subcarriers and a second-type subcarrier, the first-type subcarrier is used to carry data, and the second-type subcarrier comprises one or more of a null subcarrier, a direct current subcarrier, a guard subcarrier, and a pilot subcarrier; and

sequence numbers of the subcarriers that are input into the interleaving matrix are sequence numbers of the first-type subcarriers in the plurality of subcarriers comprised in the first frequency-domain resource;
sequence numbers of the subcarriers that are input into the interleaving matrix are the sequence numbers of the plurality of subcarriers comprised in the first frequency-domain resource, each sequence number of the second-type subcarrier in the plurality of subcarriers is a first preset sequence number, and the sequence numbers of the subcarriers output from the interleaving matrix do not comprise the first preset sequence number; or
sequence numbers of the subcarriers that are input into the interleaving matrix are the sequence numbers of the plurality of subcarriers comprised in the first frequency-domain resource, each sequence number of the second-type subcarrier in the plurality of subcarriers is a first preset sequence number, the first preset sequence number is located at a preset location of the interleaving matrix, and the sequence numbers of the subcarriers output from the interleaving matrix do not comprise the first preset sequence number.

6. The method according to claim 5, wherein the second-type subcarrier is a pilot subcarrier, and the pilot subcarrier is a maximum pilot subcarrier set of a 26-tone RU in the first frequency-domain resource.

7. The method according to any one of the preceding claims, wherein a quantity of the subcarriers that are input into the interleaving matrix and that are in the plurality of subcarriers comprised in the first frequency-domain resource is less than a quantity of subcarriers that are input into the interleaving matrix and that are supported by the interleaving matrix; and

the sequence numbers of the subcarriers that are input into the interleaving matrix are sequence numbers of subcarriers that are in the first frequency-domain resource and that are to be input into the interleaving matrix and a sequence number of a padding subcarrier, the sequence number of the padding subcarrier is located in a preset location of the interleaving matrix, each sequence number of the padding subcarrier is a second preset sequence number, and the sequence numbers of the subcarriers output from the interleaving matrix do not comprise the second preset sequence number.

8. The method according to any one of the preceding claims, wherein a quantity of the plurality of subcarriers comprised in the first frequency-domain resource is determined based on a maximum bandwidth supported by the first device.

9. The method according to any one of claims 1 to 8, wherein the first VRU is mapped to the first PRU based on a mapping relationship between a sequence number of each subcarrier comprised in the first VRU and a sequence number of each subcarrier comprised in the first PRU.

10. The method according to any one of the preceding claims, wherein the sequence numbers of the subcarriers comprised in the first frequency-domain resource start from 0 or 1;

the sequence numbers of the subcarriers comprised in the first frequency-domain resource are subcarrier numbers in actual frequency bands corresponding to the subcarriers; or
the sequence numbers of the subcarriers comprised in the first frequency-domain resource are preset sequence numbers plus a preset offset value.

11. The method according to any one of claims 1 to 10, wherein the sequence numbers of the subcarriers corresponding to the first VRU are located in a first set, and the sequence numbers of the subcarriers corresponding to the first PRU are located in the first set;

the sequence numbers of the subcarriers corresponding to the first VRU are located in a first set, the sequence numbers of the subcarriers corresponding to the first PRU are located in a second set, and there is no intersection between the first set and the second set, or a part of sequence numbers in the first set are the same as those in the second set are the same; or

the sequence numbers of the subcarriers corresponding to the first VRU are located in a first set, the sequence numbers of the subcarriers corresponding to the first PRU are located in a plurality of second sets, there is no intersection between the plurality of second sets, and there is no intersection between the first set and the plurality of second sets, or there is an intersection between the first set and a part of the plurality of second sets.

12. A communication apparatus (2300), comprising a processing module (2310) and a transceiver module (2320), wherein

the transceiver module (2320) is configured to send resource allocation information to a second device, wherein the resource allocation information indicates a first virtual resource unit, VRU, and the first VRU comprises a plurality of contiguous subcarriers in frequency domain;

the processing module (2310) is configured to map the first VRU to a first physical resource unit, PRU, based on a mapping relationship between a VRU and a PRU, wherein a plurality of subcarriers comprised in the first PRU are noncontiguous in frequency domain; and

the transceiver module (2320) is further configured to transmit data on the first PRU;

wherein that the processing module (2310) is configured to map the first VRU to a first PRU comprises:

the processing module (2310) is configured to sequentially input, into rows of an interleaving matrix according to a first order, sequence numbers of a plurality of subcarriers comprised in a first frequency-domain resource in which the first VRU is located, and output sequence numbers of the subcarriers in the interleaving matrix according to a column direction of the interleaving matrix, wherein the first order is an ascending order, or the first order is a descending order; and

wherein, before a sequence number of each subcarrier comprised in the interleaving matrix is output, an original row index sequence of the interleaving matrix is changed to a target row index sequence; and

the original row index sequence is {1, 2, 3, 4, 5, 6, 7, 8}, and the target row index sequence is {1, 5, 3, 7, 2, 6, 4, 8} or { 1, 6, 3, 8, 4, 7, 2, 5}; or

the original row index sequence is {1, 2, 3, 4, 5, 6, 7, 8, 9, 10, 11, 12, 13, 14, 15, 16}, and the target row index sequence is {1, 9, 5, 13, 3, 11, 7, 15, 2, 10, 6, 14, 4, 12, 8, 16}, or {1, 10, 3, 12, 5, 14, 7, 16, 8, 15, 6, 13, 4, 11, 2, 9}.

13. A communication apparatus (2300), comprising a processing module (2310) and a transceiver module (2320), wherein

the transceiver module (2320) is configured to receive resource allocation information from a first device, wherein the resource allocation information indicates a first virtual resource unit, VRU, and the first VRU comprises a plurality of contiguous subcarriers in frequency domain;

the processing module (2310) is configured to determine, based on a mapping relationship between a VRU and a physical resource unit, PRU, a first PRU corresponding to the first VRU, wherein a plurality of subcarriers comprised in the first PRU are noncontiguous in frequency domain; and

the transceiver module (2320) is configured to receive data from the first device on the first PRU;

wherein that the processing module (2310) is configured to determine, based on a mapping relationship between a VRU and a PRU, a first PRU corresponding to the first VRU, comprises:

the processing module (2310) is configured to sequentially input, into rows of an interleaving matrix according to a first order, sequence numbers of a plurality of subcarriers comprised in a first frequency-domain resource in which the first VRU is located, and output sequence numbers of the subcarriers in the interleaving matrix according to a column direction of the interleaving matrix, wherein the first order is an ascending order, or the first order is a descending order; and

wherein, before a sequence number of each subcarrier comprised in the interleaving matrix is output, an original row index sequence of the interleaving matrix is changed to a target row index sequence; and

the original row index sequence is {1, 2, 3, 4, 5, 6, 7, 8}, and the target row index sequence is {1, 5, 3, 7, 2, 6, 4, 8} or { 1, 6, 3, 8, 4, 7, 2, 5}; or

the original row index sequence is {1, 2, 3, 4, 5, 6, 7, 8, 9, 10, 11, 12, 13, 14, 15, 16}, and the target row index sequence is {1, 9, 5, 13, 3, 11, 7, 15, 2, 10, 6, 14, 4, 12, 8, 16}, or {1, 10, 3, 12, 5, 14, 7, 16, 8, 15, 6, 13, 4, 11, 2, 9}.

14. A computer-readable storage medium, wherein the computer-readable storage medium stores a computer program, the computer program comprises program instructions, and when the program instructions are executed by a processing module (2310) of a communication apparatus (2300), the communication apparatus is enabled to perform the method according to any one of claims 1 to 11.

**Patentansprüche**

1. Ressourcenzuweisungsverfahren, das umfasst:

Senden (S901), durch eine erste Vorrichtung, von Ressourcenzuweisungsinformationen an eine zweite Vorrichtung, wobei die Ressourcenzuweisungsinformationen eine erste virtuelle Ressourceneinheit (VRU) angeben und die erste VRU eine Vielzahl von zusammenhängenden Subträgern im Frequenzbereich umfasst; und

Zuordnen (S902), durch die erste Vorrichtung, der ersten VRU zu einer ersten physikalischen Ressourceneinheit (PRU) basierend auf einer Zuordnungsbeziehung zwischen einer VRU und einer PRU, und

Übertragen (S903) von Daten auf der ersten PRU, wobei eine Vielzahl von Subträgern, die in der ersten PRU enthalten sind, im Frequenzbereich nicht zusammenhängend sind;

wobei das Verfahren **dadurch gekennzeichnet ist, dass**

das Zuordnen, durch die erste Vorrichtung, der ersten VRU zu einer ersten PRU umfasst:

sequenzielles Eingeben, durch die erste Vorrichtung in Zeilen einer Verschachtelungsmatrix gemäß einer ersten Reihenfolge, von Sequenznummern einer Vielzahl von Subträgern, die in einer ersten Frequenzbereichsressource, in der sich die erste VRU befindet, enthalten sind, und Ausgeben von Sequenznummern der Subträger in der Verschachtelungsmatrix gemäß einer Spaltenrichtung der Verschachtelungsmatrix, wobei die erste Reihenfolge eine aufsteigende Reihenfolge ist oder die erste Reihenfolge eine absteigende Reihenfolge ist; und

wobei, bevor eine Sequenznummer jedes in der Verschachtelungsmatrix enthaltenen Subträgers ausgegeben wird, eine ursprüngliche Zeilenindexsequenz der Verschachtelungsmatrix zu einer Ziel-Zeilenindexsequenz geändert wird; und

die ursprüngliche Zeilenindexsequenz {1, 2, 3, 4, 5, 6, 7, 8} ist und die Ziel-Zeilenindexsequenz {1, 5, 3, 7, 2, 6, 4, 8} oder {1, 6, 3, 8, 4, 7, 2, 5} ist; oder

die ursprüngliche Zeilenindexsequenz {1, 2, 3, 4, 5, 6, 7, 8, 9, 10, 11, 12, 13, 14, 15, 16} ist und die Ziel-Zeilenindexsequenz {1, 9, 5, 13, 3, 11, 7, 15, 2, 10, 6, 14, 4, 12, 8, 16} oder {1, 10, 3, 12, 5, 14, 7, 16, 8, 15, 6, 13, 4, 11, 2, 9} ist.

2. Ressourcenzuweisungsverfahren, das umfasst:

Empfangen (S901), durch eine zweite Vorrichtung, von Ressourcenzuweisungsinformationen von einer ersten Vorrichtung, wobei die Ressourcenzuweisungsinformationen eine erste virtuelle Ressourceneinheit (VRU) angeben und die erste VRU eine Vielzahl von zusammenhängenden Subträgern im Frequenzbereich umfasst;

Bestimmen, durch die zweite Vorrichtung basierend auf einer Zuordnungsbeziehung zwischen einer VRU und einer physischen Ressourceneinheit (PRU), einer ersten PRU, die der ersten VRU entspricht, wobei eine Vielzahl von Subträgern, die in der ersten PRU enthalten sind, im Frequenzbereich nicht zusammenhängend sind; und

Empfangen (S903), durch die zweite Vorrichtung, von Daten von der ersten Vorrichtung auf der ersten PRU;

wobei das Verfahren **dadurch gekennzeichnet ist, dass**

das Bestimmen, durch die zweite Vorrichtung basierend auf einer Zuordnungsbeziehung zwischen einer VRU und einer PRU, einer ersten PRU, die der ersten VRU entspricht, umfasst:

sequenzielles Eingeben, durch die erste Vorrichtung in Zeilen einer Verschachtelungsmatrix gemäß einer ersten Reihenfolge, von Sequenznummern einer Vielzahl von Subträgern, die in einer ersten Frequenzbereichsressource, in der sich die erste VRU befindet, enthalten sind, und Ausgeben von Sequenznummern der Subträger in der Verschachtelungsmatrix gemäß einer Spaltenrichtung der Verschachtelungsmatrix, wobei die erste Reihenfolge eine aufsteigende Reihenfolge ist oder die erste Reihenfolge eine absteigende Reihenfolge ist; und

wobei, bevor eine Sequenznummer jedes in der Verschachtelungsmatrix enthaltenen Subträgers ausgegeben wird, eine ursprüngliche Zeilenindexsequenz der Verschachtelungsmatrix zu einer Ziel-Zeilenindexsequenz geändert wird; und

die ursprüngliche Zeilenindexsequenz $\{1, 2, 3, 4, 5, 6, 7, 8\}$ ist und die Ziel-Zeilenindexsequenz $\{1, 5, 3, 7, 2, 6, 4, 8\}$ oder $\{1, 6, 3, 8, 4, 7, 2, 5\}$ ist; oder

die ursprüngliche Zeilenindexsequenz $\{1, 2, 3, 4, 5, 6, 7, 8, 9, 10, 11, 12, 13, 14, 15, 16\}$ ist und die Ziel-Zeilenindexsequenz $\{1, 9, 5, 13, 3, 11, 7, 15, 2, 10, 6, 14, 4, 12, 8, 16\}$ oder $\{1, 10, 3, 12, 5, 14, 7, 16, 8, 15, 6, 13, 4, 11, 2, 9\}$ ist.

3. Verfahren nach Anspruch 1 oder 2, wobei eine Sequenznummer i eines Subträgers der ersten PRU, die aus einem Subträger mit einer Sequenznummer k der ersten VRU basierend auf der Verschachtelungsmatrix zugeordnet wird, die folgende Formel erfüllt: $i = N_{ZEILE} \cdot (k \bmod N_{SPALTE}) + \left\lfloor \dfrac{k}{N_{SPALTE}} \right\rfloor$ , wobei

$N_{ZEILE}$ eine Zeilenanzahl der Verschachtelungsmatrix ist, $N_{SPALTE}$ eine Spaltenanzahl der Verschachtelungsmatrix ist, k eine Sequenznummer eines Subträgers, der in die Verschachtelungsmatrix eingegeben wird, ist und i eine Sequenznummer ist, die durch Verschachteln eines Subträgers, dessen Sequenznummer k ist, unter Verwendung der Verschachtelungsmatrix erhalten wird.

4. Verfahren nach einem der Ansprüche 1 bis 3, wobei beliebige benachbarte Subträger, die in der ersten PRU enthalten sind, im Frequenzbereich nicht zusammenhängend sind.

5. Verfahren nach einem der vorstehenden Ansprüche, wobei in der Vielzahl von Subträgern, die in der ersten Frequenzbereichsressource enthalten sind, Subträger, die in die Verschachtelungsmatrix eingegeben werden, Subträger ersten Typs sind, oder Subträger, die in die Verschachtelungsmatrix eingegeben werden, Subträger ersten Typs und ein Subträger zweiten Typs sind, wobei der Subträger ersten Typs verwendet wird, um Daten zu transportieren, und der Subträger zweiten Typs einen oder mehrere von einem Null-Subträger, einem Gleichstrom-Subträger, einem Schutz-Subträger und einem Pilot-Subträger umfasst; und Sequenznummern der Subträger, die in die Verschachtelungsmatrix eingegeben werden, Sequenznummern der Subträger ersten Typs in der Vielzahl von Subträgern sind, die in der ersten Frequenzbereichsressource enthalten sind; Sequenznummern der Subträger, die in die Verschachtelungsmatrix eingegeben werden, die Sequenznummern der Vielzahl von Subträgern sind, die in der ersten Frequenzbereichsressource enthalten sind, jede Sequenznummer des Subträgers zweiten Typs in der Vielzahl von Subträgern eine erste voreingestellte Sequenznummer ist, und die Sequenznummern der Subträger, die aus der Verschachtelungsmatrix ausgegeben werden, nicht die erste voreingestellte Sequenznummer umfassen; oder Sequenznummern der Subträger, die in die Verschachtelungsmatrix eingegeben werden, die Sequenznummern der Vielzahl von Subträgern sind, die in der ersten Frequenzbereichsressource enthalten sind, jede Sequenznummer des Subträgers zweiten Typs in der Vielzahl von Subträgern eine erste voreingestellte Sequenznummer ist, die erste voreingestellte Sequenznummer sich an einer voreingestellten Stelle der Verschachtelungsmatrix befindet, und die Sequenznummern der Subträger, die aus der Verschachtelungsmatrix ausgegeben werden, nicht die erste voreingestellte Sequenznummer umfassen.

6. Verfahren nach Anspruch 5, wobei der Subträger zweiten Typs ein Pilot-Subträger ist, und der Pilot-Subträger ein maximaler Pilot-Subträger-Satz einer 26-Ton-RU in der ersten Frequenzbereichsressource ist.

7. Verfahren nach einem der vorstehenden Ansprüche, wobei eine Anzahl der Subträger, die in die Verschachtelungsmatrix eingegeben werden und zu der Vielzahl von Subträgern, die in der ersten Frequenzbereichsressource enthalten sind, gehören, geringer als eine Anzahl von Subträgern, die in die Verschachtelungsmatrix eingegeben werden und die von der Verschachtelungsmatrix unterstützt werden, ist; und die Sequenznummern der Subträger, die in die Verschachtelungsmatrix eingegeben werden, Sequenznummern von Subträgern, die sich in der ersten Frequenzbereichsressource befinden und die in die Verschachtelungsmatrix eingegeben werden sollen, und eine Sequenznummer eines Auffüll-Subträgers sind, wobei die Sequenznummer des Auffüll-Subträgers sich an einer voreingestellten Stelle der Verschachtelungsmatrix befindet, jede Sequenznummer des Auffüll-Subträgers eine zweite voreingestellte Sequenznummer ist, und die Sequenznummern der Subträger, die aus der Verschachtelungsmatrix ausgegeben werden, die zweite voreingestellte Sequenznummer nicht umfassen.

8. Verfahren nach einem der vorstehenden Ansprüche, wobei eine Anzahl der Vielzahl von Subträgern, die in der ersten Frequenzbereichsressource enthalten ist, basierend auf einer maximalen Bandbreite, die von der ersten Vorrichtung unterstützt wird, bestimmt wird.

9. Verfahren nach einem der Ansprüche 1 bis 8, wobei die erste VRU der ersten PRU basierend auf einer Zuordnungsbeziehung zwischen einer Sequenznummer jedes in der ersten VRU enthaltenen Subträgers und einer Sequenznummer jedes in der ersten PRU enthaltenen Subträgers zugeordnet wird.

10. Verfahren nach einem der vorstehenden Ansprüche, wobei die Sequenznummern der in der ersten Frequenzbereichsressource enthaltenen Subträger bei 0 oder 1 beginnen;

die Sequenznummern der in der ersten Frequenzbereichsressource enthaltenen Subträger Subträgernummern in tatsächlichen Frequenzbändern sind, die den Subträgern entsprechen; oder
die Sequenznummern der in der ersten Frequenzbereichsressource enthaltenen Subträger voreingestellte Sequenznummern plus einem voreingestellten Offset-Wert sind.

11. Verfahren nach einem der Ansprüche 1 bis 10, wobei die Sequenznummern der Subträger, die der ersten VRU entsprechen, sich in einem ersten Satz befinden, und die Sequenznummern der Subträger, die der ersten PRU entsprechen, sich in dem ersten Satz befinden;

die Sequenznummern der Subträger, die der ersten VRU entsprechen, sich in einem ersten Satz befinden, die Sequenznummern der Subträger, die der ersten PRU entsprechen, sich in einem zweiten Satz befinden, und es keine Schnittmenge zwischen dem ersten Satz und dem zweiten Satz gibt, oder ein Teil der Sequenznummern in dem ersten Satz mit denen in dem zweiten Satz übereinstimmt; oder
die Sequenznummern der Subträger, die der ersten VRU entsprechen, sich in einem ersten Satz befinden, die Sequenznummern der Subträger, die der ersten PRU entsprechen, sich in einer Vielzahl von zweiten Sätzen befinden, es keine Schnittmenge zwischen der Vielzahl von zweiten Sätzen gibt, und es keine Schnittmenge zwischen dem ersten Satz und der Vielzahl von zweiten Sätzen gibt, oder es eine Schnittmenge zwischen dem ersten Satz und einem Teil der Vielzahl von zweiten Sätzen gibt.

12. Kommunikationseinrichtung (2300), die ein Verarbeitungsmodul (2310) und ein Sendeempfängermodul (2320) umfasst, wobei

das Sendeempfängermodul (2320) konfiguriert ist, um Ressourcenzuweisungsinformationen an eine zweite Vorrichtung zu senden, wobei die Ressourcenzuweisungsinformationen eine erste virtuelle Ressourceneinheit (VRU) angeben und die erste VRU eine Vielzahl von zusammenhängenden Subträgern im Frequenzbereich umfasst;
das Verarbeitungsmodul (2310) konfiguriert ist, um die erste VRU einer ersten physischen Ressourceneinheit (PRU) basierend auf einer Zuordnungsbeziehung zwischen einer VRU und einer PRU zuzuordnen, wobei eine Vielzahl von Subträgern, die in der ersten PRU enthalten sind, im Frequenzbereich nicht zusammenhängend sind; und
das Sendeempfängermodul (2320) ferner konfiguriert ist, um Daten auf der ersten PRU zu übertragen;
wobei die Tatsache, dass das Verarbeitungsmodul (2310) konfiguriert ist, um die erste VRU einer ersten PRU zuzuordnen, umfasst:

das Verarbeitungsmodul (2310) ist konfiguriert, um sequenziell in Zeilen einer Verschachtelungsmatrix gemäß einer ersten Reihenfolge Sequenznummern einer Vielzahl von Subträgern einzugeben, die in einer ersten Frequenzbereichsressource enthalten sind, in der sich die erste VRU befindet, und Sequenznummern der Subträger in der Verschachtelungsmatrix gemäß einer Spaltenrichtung der Verschachtelungsmatrix auszugeben, wobei die erste Reihenfolge eine aufsteigende Reihenfolge ist oder die erste Reihenfolge eine absteigende Reihenfolge ist; und
wobei, bevor eine Sequenznummer jedes in der Verschachtelungsmatrix enthaltenen Subträgers ausgegeben wird, eine ursprüngliche Zeilenindexsequenz der Verschachtelungsmatrix zu einer Ziel-Zeilenindexsequenz geändert wird; und
die ursprüngliche Zeilenindexsequenz {1, 2, 3, 4, 5, 6, 7, 8} ist und die Ziel-Zeilenindexsequenz {1, 5, 3, 7, 2, 6, 4, 8} oder {1, 6, 3, 8, 4, 7, 2, 5} ist; oder
die ursprüngliche Zeilenindexsequenz {1, 2, 3, 4, 5, 6, 7, 8, 9, 10, 11, 12, 13, 14, 15, 16} ist und die Ziel-Zeilenindexsequenz {1, 9, 5, 13, 3, 11, 7, 15, 2, 10, 6, 14, 4, 12, 8, 16} oder {1, 10, 3, 12, 5, 14, 7, 16, 8, 15, 6, 13, 4, 11, 2, 9} ist.

13. Kommunikationseinrichtung (2300), die ein Verarbeitungsmodul (2310) und ein Sendeempfängermodul (2320) umfasst, wobei

das Sendeempfängermodul (2320) konfiguriert ist, um Ressourcenzuweisungsinformationen von einer ersten Vorrichtung zu empfangen, wobei die Ressourcenzuweisungsinformationen eine erste virtuelle Ressourceneinheit (VRU) angeben, und die erste VRU eine Vielzahl von zusammenhängenden Subträgern im Frequenzbereich umfasst;

das Verarbeitungsmodul (2310) konfiguriert ist, um basierend auf einer Zuordnungsbeziehung zwischen einer VRU und einer physischen Ressourceneinheit (PRU) eine erste PRU zu bestimmen, die der ersten VRU entspricht, wobei eine Vielzahl von Subträgern, die in der ersten PRU enthalten sind, im Frequenzbereich nicht zusammenhängend sind; und

das Sendeempfängermodul (2320) konfiguriert ist, um Daten von der ersten Vorrichtung auf der ersten PRU zu empfangen;

wobei die Tatsache, dass das Verarbeitungsmodul (2310) konfiguriert ist, um basierend auf einer Zuordnungsbeziehung zwischen einer VRU und einer PRU eine erste PRU zu bestimmen, die der ersten VRU entspricht, umfasst:

das Verarbeitungsmodul (2310) ist konfiguriert, um sequenziell in Zeilen einer Verschachtelungsmatrix gemäß einer ersten Reihenfolge Sequenznummern einer Vielzahl von Subträgern einzugeben, die in einer ersten Frequenzbereichsressource enthalten sind, in der sich die erste VRU befindet, und Sequenznummern der Subträger in der Verschachtelungsmatrix gemäß einer Spaltenrichtung der Verschachtelungsmatrix auszugeben, wobei die erste Reihenfolge eine aufsteigende Reihenfolge ist oder die erste Reihenfolge eine absteigende Reihenfolge ist; und

wobei, bevor eine Sequenznummer jedes in der Verschachtelungsmatrix enthaltenen Subträgers ausgegeben wird, eine ursprüngliche Zeilenindexsequenz der Verschachtelungsmatrix zu einer Ziel-Zeilenindexsequenz geändert wird; und

die ursprüngliche Zeilenindexsequenz {1, 2, 3, 4, 5, 6, 7, 8} ist und die Ziel-Zeilenindexsequenz {1, 5, 3, 7, 2, 6, 4, 8} oder {1, 6, 3, 8, 4, 7, 2, 5} ist; oder

die ursprüngliche Zeilenindexsequenz {1, 2, 3, 4, 5, 6, 7, 8, 9, 10, 11, 12, 13, 14, 15, 16} ist und die Ziel-Zeilenindexsequenz {1, 9, 5, 13, 3, 11, 7, 15, 2, 10, 6, 14, 4, 12, 8, 16} oder {1, 10, 3, 12, 5, 14, 7, 16, 8, 15, 6, 13, 4, 11, 2, 9} ist.

14. Computerlesbares Speicherungsmedium, wobei das computerlesbare Speicherungsmedium ein Computerprogramm speichert, das Computerprogramm Programmanweisungen umfasst und, wenn die Programmanweisungen durch ein Verarbeitungsmodul (2310) einer Kommunikationseinrichtung (2300) ausgeführt werden, die Kommunikationseinrichtung befähigt wird, das Verfahren nach einem der Ansprüche 1 bis 11 durchzuführen.

## Revendications

1. Procédé d'attribution de ressources, comprenant :

l'envoi (S901), par un premier dispositif, d'informations d'attribution de ressources à un second dispositif, dans lequel les informations d'attribution de ressources indiquent une première unité de ressources virtuelle, VRU, et la première VRU comprend une pluralité de sous-porteuses contiguës dans un domaine fréquentiel ; et

le mappage (S902), par le premier dispositif, de la première VRU sur une première unité de ressources physique, PRU, sur la base d'une relation de mappage entre une VRU et une PRU, et

la transmission (S903) de données sur la première PRU, dans lequel une pluralité de sous-porteuses comprises dans la première PRU sont non contiguës dans un domaine fréquentiel ;

le procédé étant **caractérisé en ce que**

le mappage, par le premier dispositif, de la première VRU sur une première PRU comprend :

l'entrée séquentielle, par le premier dispositif dans des rangées d'une matrice d'entrelacement selon un premier ordre, de numéros de séquence d'une pluralité de sous-porteuses comprises dans une première ressource dans un domaine fréquentiel dans laquelle se trouve la première VRU, et l'émission de numéros de séquence des sous-porteuses dans la matrice d'entrelacement selon un sens de colonne de la matrice d'entrelacement, dans lequel le premier ordre est un ordre croissant, ou le premier ordre est un ordre décroissant ; et

dans lequel, avant qu'un numéro de séquence de chaque sous-porteuse comprise dans la matrice d'entrelacement ne soit émis, une séquence d'indices de rangée d'origine de la matrice d'entrelacement est remplacée par une séquence d'indices de rangée cible ; et

la séquence d'indices de rangée d'origine est {1, 2, 3, 4, 5, 6, 7, 8}, et la séquence d'indices de rangée cible est {1, 5, 3, 7, 2, 6, 4, 8} ou {1, 6, 3, 8, 4, 7, 2, 5} ; ou

la séquence d'index de rangée d'origine est {1, 2, 3, 4, 5, 6, 7, 8, 9, 10, 11, 12, 13, 14, 15, 16}, et la séquence d'index de rangée cible est {1, 9, 5, 13, 3, 11, 7, 15, 2, 10, 6, 14, 4, 12, 8, 16}, ou {1, 10, 3, 12, 5, 14, 7, 16, 8, 15, 6, 13, 4, 11, 2, 9}.

2. Procédé d'attribution de ressources, comprenant :

la réception (S901), par un second dispositif, d'informations d'attribution de ressources en provenance d'un premier dispositif, dans lequel les informations d'attribution de ressources indiquent une première unité de ressources virtuelle, VRU, et la première VRU comprend une pluralité de sous-porteuses contiguës dans un domaine fréquentiel ;

la détermination, par le second dispositif sur la base d'une relation de mappage entre une VRU et une unité de ressources physique, PRU, d'une première PRU correspondant à la première VRU, dans lequel une pluralité de sous-porteuses comprises dans la première PRU sont non contiguës dans un domaine fréquentiel ; et

la réception (S903), par le second dispositif, de données en provenance du premier dispositif sur la première PRU ;

le procédé étant **caractérisé en ce que**

la détermination, par le second dispositif sur la base d'une relation de mappage entre une VRU et une PRU, d'une première PRU correspondant au premier VRU comprend :

l'entrée séquentielle, par le premier dispositif dans des rangées d'une matrice d'entrelacement selon un premier ordre, de numéros de séquence d'une pluralité de sous-porteuses comprises dans une première ressource dans un domaine fréquentiel dans laquelle se trouve la première VRU, et l'émission de numéros de séquence des sous-porteuses dans la matrice d'entrelacement selon un sens de colonne de la matrice d'entrelacement, dans lequel le premier ordre est un ordre croissant, ou le premier ordre est un ordre décroissant ; et

dans lequel, avant qu'un numéro de séquence de chaque sous-porteuse comprise dans la matrice d'entrelacement ne soit émis, une séquence d'indices de rangée d'origine de la matrice d'entrelacement est remplacée par une séquence d'indices de rangée cible ; et

la séquence d'indices de rangée d'origine est {1, 2, 3, 4, 5, 6, 7, 8}, et la séquence d'indices de rangée cible est {1, 5, 3, 7, 2, 6, 4, 8} ou {1, 6, 3, 8, 4, 7, 2, 5} ; ou

la séquence d'index de rangée d'origine est {1, 2, 3, 4, 5, 6, 7, 8, 9, 10, 11, 12, 13, 14, 15, 16}, et la séquence d'index de rangée cible est {1, 9, 5, 13, 3, 11, 7, 15, 2, 10, 6, 14, 4, 12, 8, 16}, ou {1, 10, 3, 12, 5, 14, 7, 16, 8, 15, 6, 13, 4, 11, 2, 9}.

3. Procédé selon la revendication 1 ou 2, dans lequel un numéro de séquence i d'une sous-porteuse de la première PRU mappée à partir d'une sous-porteuse avec un numéro de séquence k de la première VRU sur la base de la matrice d'entrelacement satisfait la formule suivante : $i = N_{\text{RANGÉE}} \cdot (k \bmod N_{\text{COL}}) + \left\lfloor \frac{k}{N_{\text{COL}}} \right\rfloor$ , où

$N_{\text{RANGÉE}}$ est une quantité de rangées de la matrice d'entrelacement, $N_{\text{COL}}$ est une quantité de colonnes de la matrice d'entrelacement, k est un numéro de séquence d'une sous-porteuse qui est entrée dans la matrice d'entrelacement, et i est un numéro de séquence obtenu par entrelacement d'une sous-porteuse dont le numéro de séquence est k en utilisant la matrice d'entrelacement.

4. Procédé selon l'une quelconque des revendications 1 à 3, dans lequel toutes les sous-porteuses adjacentes comprises dans la première PRU sont non contiguës dans un domaine fréquentiel.

5. Procédé selon l'une quelconque des revendications précédentes, dans lequel, dans la pluralité de sous-porteuses comprises dans la première ressource dans un domaine fréquentiel, des sous-porteuses qui sont entrées dans la matrice d'entrelacement sont des sous-porteuses de premier type, ou les sous-porteuses qui sont entrées dans la matrice d'entrelacement sont des sous-porteuses de premier type et une sous-porteuse de second type, la sous-porteuse de premier type est utilisée pour transporter des données, et la sous-porteuse de second type comprend une ou plusieurs parmi une sous-porteuse nulle, une sous-porteuse à courant continu, une sous-porteuse de garde et une sous-porteuse pilote ; et

des numéros de séquence des sous-porteuses qui sont entrées dans la matrice d'entrelacement sont des numéros de séquence des sous-porteuses de premier type dans la pluralité de sous-porteuses comprises dans la première ressource dans un domaine fréquentiel ;

des numéros de séquence des sous-porteuses qui sont entrées dans la matrice d'entrelacement sont les numéros de séquence de la pluralité de sous-porteuses comprises dans la première ressource dans un domaine fréquentiel, chaque numéro de séquence de la sous-porteuse de second type dans la pluralité de sous-porteuses est un premier numéro de séquence prédéfini, et les numéros de séquence des sous-porteuses émis par la matrice d'entrelacement ne comprennent pas le premier numéro de séquence prédéfini ; ou

des numéros de séquence des sous-porteuses qui sont entrées dans la matrice d'entrelacement sont les numéros de séquence de la pluralité de sous-porteuses comprises dans la première ressource dans un domaine fréquentiel, chaque numéro de séquence de la sous-porteuse de second type dans la pluralité de sous-porteuses est un premier numéro de séquence prédéfini, le premier numéro de séquence prédéfini se trouve au niveau d'un emplacement prédéfini de la matrice d'entrelacement, et les numéros de séquence des sous-porteuses émis par la matrice d'entrelacement ne comprennent pas le premier numéro de séquence prédéfini.

6. Procédé selon la revendication 5, dans lequel la sous-porteuse de second type est une sous-porteuse pilote, et la sous-porteuse pilote est un ensemble de sous-porteuses pilotes maximal d'une RU à 26 tonalités dans la première ressource dans un domaine fréquentiel.

7. Procédé selon l'une quelconque des revendications précédentes, dans lequel une quantité de sous-porteuses qui sont entrées dans la matrice d'entrelacement et qui se trouvent dans la pluralité de sous-porteuses comprises dans la première ressource dans un domaine fréquentiel est inférieure à une quantité de sous-porteuses qui sont entrées dans la matrice d'entrelacement et qui sont prises en charge par la matrice d'entrelacement ; et les numéros de séquence des sous-porteuses qui sont entrées dans la matrice d'entrelacement sont des numéros de séquence de sous-porteuses qui se trouvent dans la première ressource dans un domaine fréquentiel et qui doivent être entrées dans la matrice d'entrelacement et un numéro de séquence d'une sous-porteuse de remplissage, le numéro de séquence de la sous-porteuse de remplissage se trouve dans un emplacement prédéfini de la matrice d'entrelacement, chaque numéro de séquence de la sous-porteuse de remplissage est un second numéro de séquence prédéfini, et les numéros de séquence des sous-porteuses émis par la matrice d'entrelacement ne comprennent pas le second numéro de séquence prédéfini.

8. Procédé selon l'une quelconque des revendications précédentes, dans lequel une quantité de la pluralité de sous-porteuses comprises dans la première ressource dans un domaine fréquentiel est déterminée sur la base d'une largeur de bande maximale prise en charge par le premier dispositif.

9. Procédé selon l'une quelconque des revendications 1 à 8, dans lequel la première DRV est mappée sur la première PRU sur la base d'une relation de mappage entre un numéro de séquence de chaque sous-porteuse comprise dans la première VRU et un numéro de séquence de chaque sous-porteuse comprise dans la première PRU.

10. Procédé selon l'une quelconque des revendications précédentes, dans lequel les numéros de séquence des sous-porteuses comprises dans la première ressource dans un domaine fréquentiel partent de 0 ou 1 ;

les numéros de séquence des sous-porteuses comprises dans la première ressource dans un domaine fréquentiel sont des numéros de sous-porteuses dans des bandes de fréquences réelles correspondant aux sous-porteuses ; ou

les numéros de séquence des sous-porteuses comprises dans la première ressource dans un domaine fréquentiel sont des numéros de séquence prédéfinis plus une valeur de décalage prédéfinie.

11. Procédé selon l'une quelconque des revendications 1 à 10, dans lequel les numéros de séquence des sous-porteuses correspondant à la première VRU se trouvent dans un premier ensemble, et les numéros de séquence des sous-porteuses correspondant à la première PRU se trouvent dans le premier ensemble ;

les numéros de séquence des sous-porteuses correspondant à la première VRU se trouvent dans un premier ensemble, les numéros de séquence des sous-porteuses correspondant à la première PRU se trouvent dans un second ensemble, et il n'existe pas d'intersection entre le premier ensemble et le second ensemble, ou une partie de numéros de séquence dans le premier ensemble sont identiques à ceux dans le second ensemble ; ou les numéros de séquence des sous-porteuses correspondant à la première VRU se trouvent dans un premier ensemble, les numéros de séquence des sous-porteuses correspondant à la première PRU se trouvent dans une pluralité de seconds ensembles, il n'existe pas d'intersection entre la pluralité de seconds ensembles, et il n'existe pas d'intersection entre le premier ensemble et la pluralité de seconds ensembles, ou il existe une intersection entre le premier ensemble et une partie de la pluralité de seconds ensembles.

12. Appareil de communication (2300), comprenant un module de traitement (2310) et un module émetteur-récepteur (2320), dans lequel

le module émetteur-récepteur (2320) est configuré pour envoyer des informations d'attribution de ressources à un second dispositif, dans lequel les informations d'attribution de ressources indiquent une première unité de ressources virtuelle, VRU, et la première VRU comprend une pluralité de sous-porteuses contiguës dans un domaine fréquentiel ;

le module de traitement (2310) est configuré pour mapper la première VRU sur une première unité de ressources physique, PRU, sur la base d'une relation de mappage entre une VRU et une PRU, dans lequel une pluralité de sous-porteuses comprises dans la première PRU sont non contiguës dans un domaine fréquentiel ; et

le module émetteur-récepteur (2320) est en outre configuré pour transmettre des données sur la première PRU ;

dans lequel le fait que le module de traitement (2310) est configuré pour mapper la première VRU à une première PRU comprend :

le module de traitement (2310) est configuré pour entrer de manière séquentielle, dans des rangées d'une matrice d'entrelacement selon un premier ordre, des numéros de séquence d'une pluralité de sous-porteuses comprises dans une première ressource dans un domaine fréquentiel dans laquelle se trouve la première VRU, et émettre des numéros de séquence des sous-porteuses dans la matrice d'entrelacement selon un sens de colonne de la matrice d'entrelacement, dans lequel le premier ordre est un ordre croissant, ou le premier ordre est un ordre décroissant ; et

dans lequel, avant qu'un numéro de séquence de chaque sous-porteuse comprise dans la matrice d'entrelacement ne soit émis, une séquence d'indices de rangée d'origine de la matrice d'entrelacement est remplacée par une séquence d'indices de rangée cible ; et

la séquence d'indices de rangée d'origine est {1, 2, 3, 4, 5, 6, 7, 8}, et la séquence d'indices de rangée cible est {1, 5, 3, 7, 2, 6, 4, 8} ou {1, 6, 3, 8, 4, 7, 2, 5} ; ou

la séquence d'index de rangée d'origine est {1, 2, 3, 4, 5, 6, 7, 8, 9, 10, 11, 12, 13, 14, 15, 16}, et la séquence d'index de rangée cible est {1, 9, 5, 13, 3, 11, 7, 15, 2, 10, 6, 14, 4, 12, 8, 16}, ou {1, 10, 3, 12, 5, 14, 7, 16, 8, 15, 6, 13, 4, 11, 2, 9}.

13. Appareil de communication (2300), comprenant un module de traitement (2310) et un module émetteur-récepteur (2320), dans lequel

le module émetteur-récepteur (2320) est configuré pour recevoir des informations d'attribution de ressources en provenance d'un premier dispositif, dans lequel les informations d'attribution de ressources indiquent une première unité de ressources virtuelle, VRU, et la première VRU comprend une pluralité de sous-porteuses contiguës dans un domaine fréquentiel ;

le module de traitement (2310) est configuré pour déterminer, sur la base d'une relation de mappage entre une VRU et une unité de ressources physique, PRU, une première PRU correspondant à la première VRU, dans lequel une pluralité de sous-porteuses comprises dans la première PRU sont non contiguës dans un domaine fréquentiel ; et le module émetteur-récepteur (2320) est configuré pour recevoir des données en provenance du premier dispositif sur la première PRU ;

dans lequel le module de traitement (2310) est configuré pour déterminer, sur la base d'une relation de mappage entre une VRU et une PRU, une première PRU correspondant à la première VRU, comprend :

le module de traitement (2310) est configuré pour entrer de manière séquentielle, dans des rangées d'une matrice d'entrelacement selon un premier ordre, des numéros de séquence d'une pluralité de sous-porteuses comprises dans une première ressource dans un domaine fréquentiel dans laquelle se trouve la première VRU, et émettre des numéros de séquence des sous-porteuses dans la matrice d'entrelacement selon un sens de colonne de la matrice d'entrelacement, dans lequel le premier ordre est un ordre croissant, ou le premier ordre est un ordre décroissant ; et

dans lequel, avant qu'un numéro de séquence de chaque sous-porteuse comprise dans la matrice d'entrelacement ne soit émis, une séquence d'indices de rangée d'origine de la matrice d'entrelacement est remplacée par une séquence d'indices de rangée cible ; et

la séquence d'indices de rangée d'origine est {1, 2, 3, 4, 5, 6, 7, 8}, et la séquence d'indices de rangée cible est {1, 5, 3, 7, 2, 6, 4, 8} ou {1, 6, 3, 8, 4, 7, 2, 5} ; ou

la séquence d'index de rangée d'origine est {1, 2, 3, 4, 5, 6, 7, 8, 9, 10, 11, 12, 13, 14, 15, 16}, et la séquence d'index de rangée cible est {1, 9, 5, 13, 3, 11, 7, 15, 2, 10, 6, 14, 4, 12, 8, 16}, ou {1, 10, 3, 12, 5, 14, 7, 16, 8, 15, 6, 13, 4, 11, 2, 9}.

14. Support de stockage lisible par ordinateur, dans lequel le support de stockage lisible par ordinateur stocke un programme informatique, le programme informatique comprend des instructions de programme, et lorsque les instructions de programme sont exécutées par un module de traitement (2310) d'un appareil de communication (2300), l'appareil de communication est activé pour réaliser le procédé selon l'une quelconque des revendications 1 à 11.

Wireless access point
(AP)

Station 1
(STA 1)

Station 2
(STA 2)

FIG. 1

FIG. 2

FIG. 3

FIG. 4

FIG. 5

Discrete 996-tone RU

996

996

80 MHz

80 MHz

80+80 MHz

Subcarriers of a
discrete 996-tone RU

FIG. 6

FIG. 7

: Subcarriers of a discrete 26-tone RU

FIG. 8

FIG. 9

FIG. 10

FIG. 11

FIG. 12

Sequence number sequence of subcarriers of a VRU (not including a sequence number of a second-type subcarrier)

Input

| Row 1 |
| Row 2 |
| ... |
| Row N |

Output

| Column 1 |
| Column 2 |
| ... |
| Column M |

Sequence number sequence of subcarriers of a PRU (not including the sequence number of the second-type subcarrier)

FIG. 13

Sequence number sequence of subcarriers of a VRU (a sequence number of a second-type subcarrier is *)

Input

A location of the sequence number of * in the sequence number sequence remains unchanged

Row 1

Row 2

...

Row N

Output

Column 1

Column 2

...

Column M

The sequence number of * is not output

Sequence number sequence of subcarriers of a PRU (not including the sequence number of *)

FIG. 14

Sequence number sequence of subcarriers of a VRU (a sequence number of a second-type subcarrier is *)

Input

The sequence number of * is located at a preset location in an interleaving matrix

| Row 1 |
| Row 2 |
| ... |
| Row N |

Output

| Column 1 |
| Column 2 |
| ... |
| Column M |

The sequence number of * is not output

Sequence number sequence of subcarriers of a PRU (not including the sequence number of *)

FIG. 15

FIG. 16

FIG. 17

Add (Add) 256

Substract (Substract) 256

5 DC

23 DC

5 DC

26 26 26 26 26 26 26 26 26 26 26 26 26 26 26 26 26 26 26 26 26 26 26 26 26 26 26 26 26 26 26 26

52 52 52 52 52 52 52 52 52 52 52 52 52 52 52 52

106 106 106 106 106 106 106 106

242 242 242 242

484R 484L 484R 484L

996+5 DC

57

**EP 4 294 099 B1**

FIG. 18

FIG. 19

FIG. 20

FIG. 21

FIG. 22

FIG. 23

FIG. 24

**EP 4 294 099 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020244420 A1
- US 2020229220 A1